# EUROPEAN PATENT SPECIFICATION

(11) **EP 4 362 143 B1**
(45) Date of publication and mention of the grant of the patent: **19.03.2025**
(21) Application number: 23178073.5
(22) Date of filing: 07.06.2023
(51) Int. Cl.: H01M 8/0258, H01M 8/0273, H01M 8/18, H01M 8/2465, H01M 8/2475, H01M 8/2483, H01M 8/0263, H01M 8/026

(54) **FLOW BATTERY AND CELL STACK**
FLUSSBATTERIE UND ZELLENSTAPEL
BATTERIE À FLUX ET EMPILEMENT DE CELLULES

(30) Priority: 30.09.2022 CN 202211209316
(43) Date of publication of application: 01.05.2024
(73) Proprietor: Hunan Province Yinfeng New Energy Co., Ltd, Changsha City Hunan 410699 (CN)
(72) Inventor: WU, Xiongwei, Changsha City, 410000 (CN); XIAO, Bo, Changsha City, 410000 (CN); LIU, Jun, Changsha City, 410000 (CN); WU, Xuewen, Changsha City, 410000 (CN); XIE, Xuanzhi, Changsha City, 410000 (CN); YIN, Xingrong, Changsha City, 410000 (CN); ZHANG, Jie, Changsha City, 410000 (CN)
(74) Representative: dompatent von Kreisler Selting Werner - Partnerschaft von Patent- und Rechtsanwälten mbB

(56) References cited:
- WO-A1-2021/231187
- CN-A- 103 390 759
- CN-A- 109 216 743
- US-A1- 2022 093 942

## Description

### TECHNICAL FIELD

The present disclosure relates to the field of flow cell technology, in particular to a flow battery and a cell stack.

### BACKGROUND

Fossil energy resources will be exhausted inevitably, and renewable energy sources, such as solar energy and wind energy, have attracted more and more attention. However, the renewable energy resources are usually discontinuous, and a serious impact may be caused on the electricity grid due to the instability. Through the flow cell energy storage technology, it is able for the renewable energy resources to achieve peak-load shifting in a better manner.

A flow cell stack is a core component of a flow cell energy storage system, and the cost performance of the energy storage system depends on the performance of the flow cell stack.

Currently, in order to improve electric energy conversion efficiency, usually a length of an electrode through which an electrolyte flows needs to be reduced. However, an area of the electrode needs to be increased to provide same power, i.e., the length of the electrode needs to be increased. In the case of a longer electrode, there is a challenge for the sealing of a flow channel of the electrode. Currently, it is impossible for the flow cell to meet the requirement on actual power as well as the sealing of the flow channel. CN 103 390 759 A, CN 103 390 759 A, WO 2021/231187 A1 and US 2022/093942 A1 disclose different configurations for flow batteries with arch-like flow channels.

### SUMMARY

An object of the present disclosure is to provide a flow battery and a cell stack, so as to improve the electric energy conversion efficiency.

In order to solve the above-mentioned problem, the present disclosure provides the following technical solutions.

In one aspect, the present disclosure provides in some embodiments a cell stack of a flow battery, including: a first end plate; a second end plate; and at least one cell module arranged between the first end plate and the second end plate. Each cell module includes a first flow channel end plate, a second flow channel end plate arranged opposite to the first flow channel end plate, and single-cell assemblies arranged between the first flow channel end plate and the second flow channel end plate. The single-cell assemblies include at least three hermetically-assembled cell assemblies, the first flow channel end plate is provided with a first arch-like flow channel and a second arch-like flow channel, the second flow channel end plate is provided with a third arch-like flow channel and a fourth arch-like flow channel, each of the first arch-like flow channel, the second arch-like flow channel, the third arch-like flow channel and the fourth arch-like flow channel is provided with a flow channel aperture, each flow channel aperture is in communication with the at least three hermetically-assembled cell assemblies, an electrolyte in the first arch-like flow channel flows through the at least three hermetically-assembled cell assemblies via the flow channel aperture in the first arch-like flow channel to the second arch-like flow channel, and an electrolyte in the third arch-like flow channel flows through the at least three hermetically-assembled cell assemblies via the flow channel aperture in the third arch-like flow channel to the fourth arch-like flow channel.

In another aspect, the present disclosure provides in some embodiments a flow battery including the above-mentioned cell stack.

The present disclosure at least has the above-mentioned beneficial effects.

According to the embodiments of the present disclosure, the cell stack includes: the first end plate; the second end plate; and the at least one cell module arranged between the first end plate and the second end plate. Each cell module includes the first flow channel end plate, the second flow channel end plate arranged opposite to the first flow channel end plate, and the single-cell assemblies arranged between the first flow channel end plate and the second flow channel end plate. The single-cell assemblies include at least three hermetically-assembled cell assemblies, the first flow channel end plate is provided with the first arch-like flow channel and the second arch-like flow channel, the second flow channel end plate is provided with the third arch-like flow channel and the fourth arch-like flow channel, each of the first arch-like flow channel, the second arch-like flow channel, the third arch-like flow channel and the fourth arch-like flow channel is provided with the flow channel aperture, each flow channel aperture is in communication with the at least three hermetically-assembled cell assemblies, the electrolyte in the first arch-like flow channel flows through the at least three hermetically-assembled cell assemblies via the flow channel aperture in the first arch-like flow channel to the second arch-like flow channel, and the electrolyte in the third arch-like flow channel flows through the at least three hermetically-assembled cell assemblies via the flow channel aperture in the third arch-like flow channel to the fourth arch-like flow channel. As a result, it is able to increase a length of an electrode in the flow battery along with an increase in the quantity of flow channel apertures, adjust the length of the electrode randomly in the case of same output power and a same area of the electrode, and narrow a path of the electrolyte flowing through the electrode, thereby to improve the electric energy conversion efficiency and improve the sealability of the flow channels.

### BRIEF DESCRIPTION OF THE DRAWINGS

Fig. 1 is a solid view of a cell stack of a flow battery according to one embodiment of the present disclosure;
Fig. 2 is a solid view of an individual cell module of the cell stack according to one embodiment of the present disclosure;
Fig. 3 is an exploded view of the individual cell module of the cell stack according to one embodiment of the present disclosure;
Fig. 4 is a perspective view of a first flow channel end plate of the cell stack according to one embodiment of the present disclosure;
Fig. 5 is a sectional view of the first flow channel end plate of the cell stack according to one embodiment of the present disclosure;
Fig. 6 is a sectional view of a second flow channel end plate of the cell stack according to one embodiment of the present disclosure;
Fig. 7 is a schematic view showing a first cell assembly of an individual cell module of the cell stack according to one embodiment of the present disclosure;
Fig. 8 is a schematic view showing a first end surface of a first outer frame of the first cell assembly according to one embodiment of the present disclosure;
Fig. 9 is a schematic view showing a second end surface of the first outer frame of the first cell assembly according to one embodiment of the present disclosure;
Fig. 10 is a schematic view showing a first end surface of a second outer frame of the first cell assembly according to one embodiment of the present disclosure;
Fig. 11 is a schematic view showing a second end surface of the second outer frame of the first cell assembly according to one embodiment of the present disclosure;
Fig. 12 is a schematic view showing a second cell assembly of the individual cell module of the cell stack according to one embodiment of the present disclosure;
Fig. 13 is a schematic view showing a second end surface of a third outer frame of the second cell assembly according to one embodiment of the present disclosure;
Fig. 14 is a schematic view showing a first end surface of the third outer frame of the second cell assembly according to one embodiment of the present disclosure;
Fig. 15 is a schematic view showing a third cell assembly of the individual cell module of the cell stack according to one embodiment of the present disclosure;
Fig. 16 is a schematic view showing a second end surface of a fifth outer frame of the third cell assembly according to one embodiment of the present disclosure;
Fig. 17 is a schematic view showing a first end surface of the fifth outer frame of the third cell assembly according to one embodiment of the present disclosure;
Fig. 18 is a sectional view of the fifth outer frame of the third cell assembly according to one embodiment of the present disclosure;
Fig. 19 is a schematic view showing a second end surface of a sixth outer frame of the third cell assembly according to one embodiment of the present disclosure;
Fig. 20 is a schematic view showing a first end surface of the sixth outer frame of the third cell assembly according to one embodiment of the present disclosure;
Fig. 21 is a sectional view of the sixth outer frame of the third cell assembly according to one embodiment of the present disclosure;
Fig. 22 is a sectional view of the cell stack after the assembling of the fifth outer frame, a second inner frame and a fourth bipolar plate according to one embodiment of the present disclosure;
Fig. 23 is a sectional view of the cell stack after the assembling of a fifth inner frame, the sixth outer frame and a third separator according to one embodiment of the present disclosure;
Fig. 24 is a solid view of two third cell assemblies of the cell stack according to one embodiment of the present disclosure;
Fig. 25 is a schematic view showing a second end surface of a first inner frame and a second end surface of the fifth inner frame according to one embodiment of the present disclosure;
Fig. 26 is a schematic view showing a first end surface of the first inner frame and a first end surface of the fifth inner frame according to one embodiment of the present disclosure;
Fig. 27 is a sectional view of the first inner frame and the fifth inner frame according to one embodiment of the present disclosure;
Fig. 28 is a schematic view showing a second end surface of a second inner frame and a second end surface of a sixth inner frame according to one embodiment of the present disclosure;
Fig. 29 is a schematic view showing a first end surface of the second inner frame and a first end surface of the sixth inner frame according to one embodiment of the present disclosure;
Fig. 30 is a sectional view of the second inner frame and the sixth inner frame according to one embodiment of the present disclosure;
Fig. 31 is a sectional view of a cavity between the inner frame and the outer frame according to one embodiment of the present disclosure; and
Fig. 32 is a sectional view of the second outer frame at a fourth inlet flow channel and a third inlet flow channel according to one embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure. Actually, the embodiments are provided so as to facilitate the understanding of the scope of the present disclosure.

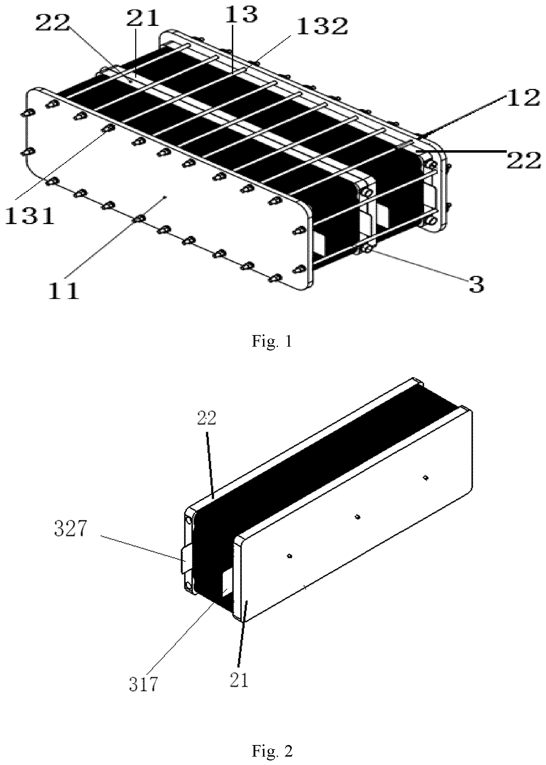

As shown in Figs. 1 to 6, the present disclosure provides in some embodiments a cell stack of a flow battery, which includes: a first end plate 11; a second end plate 12; and at least one cell module arranged between the first end plate 11 and the second end plate 12. Each cell module includes a first flow channel end plate 21, a second flow channel end plate 22 arranged opposite to the first flow channel end plate 21, and single-cell assemblies 3 arranged between the first flow channel end plate 21 and the second flow channel end plate 22. The single-cell assemblies 3 include at least three hermetically-assembled cell assemblies, the first flow channel end plate 21 is provided with a first arch-like flow channel 24 and a second arch-like flow channel 25, the second flow channel end plate 22 is provided with a third arch-like flow channel 26 and a fourth arch-like flow channel 27, each of the first arch-like flow channel 24, the second arch-like flow channel 25, the third arch-like flow channel 26 and the fourth arch-like flow channel 27 is provided with a flow channel aperture, each flow channel aperture is in communication with the at least three hermetically-assembled cell assemblies, an electrolyte in the first arch-like flow channel 24 flows through the at least three hermetically-assembled cell assemblies via the flow channel aperture in the first arch-like flow channel 24 to the second arch-like flow channel 25, and an electrolyte in the third arch-like flow channel 26 flows through the at least three hermetically-assembled cell assemblies via the flow channel aperture in the third arch-like flow channel 26 to the fourth arch-like flow channel 27.

According to the embodiments of the present disclosure, it is able to increase a length of an electrode in the flow battery along with an increase in the quantity of flow channel apertures, adjust the length of the electrode randomly in the case of same output power and a same area of the electrode, and narrow a path of the electrolyte flowing through the electrode, thereby to improve the electric energy conversion efficiency and improve the sealability of the flow channels.

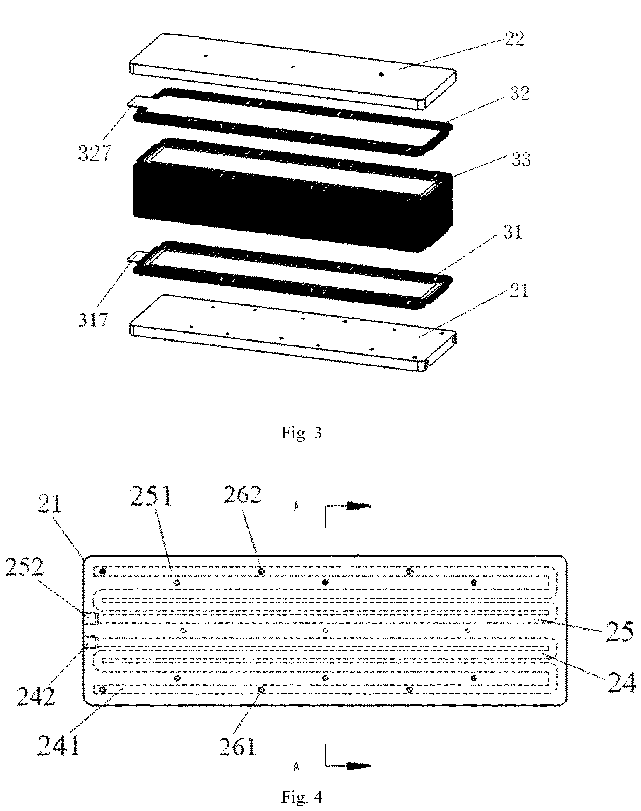

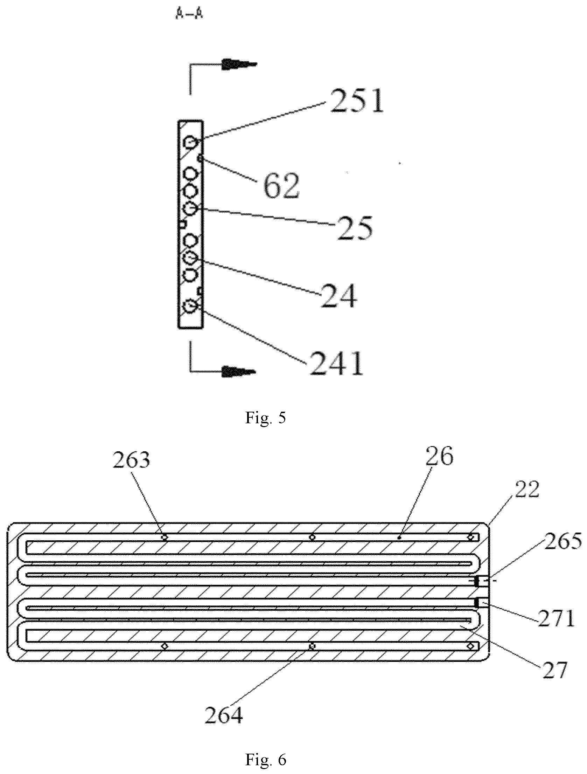

As shown in Figs. 4 and 5, in a possible embodiment of the present disclosure, the flow channel apertures include a first flow channel aperture 261 formed in the first arch-like flow channel 24, a second flow channel aperture 262 formed in the second arch-like flow channel 25, a third flow channel aperture 263 formed in the third arch-like flow channel 26, and a fourth flow channel aperture 264 formed in the fourth arch-like flow channel 27. When a positive electrolyte is injected into the first arch-like flow channel 24 in the first flow channel end plate 21, a negative electrolyte is injected into the third arch-like flow channel 26 in the second flow channel end plate 22. In contrast, when the negative electrolyte is injected into the first arch-like flow channel 24 in the first flow channel end plate 21, the positive electrolyte is injected into the third arch-like flow channel 26 in the second flow channel end plate 22.

In the embodiments of the present disclosure, after the positive electrolyte has been injected into the first arch-like flow channel 24 in the first flow channel end plate 21, the positive electrolyte flows into the at least three hermetically-assembled cell assemblies via the first flow channel aperture 261, and then flows into the second arch-like flow channel 25 via the second flow channel aperture 262. After the negative electrolyte has been injected into the third arch-like flow channel 26 in the second flow channel end plate 22, the negative electrolyte flows into the at least three hermetically-assembled cell assemblies via the second flow channel aperture 263, and then flows into the fourth arch-like flow channel 27 via the fourth flow channel aperture 264.

In a possible embodiment of the present disclosure, the first end plate 11 is provided with a plurality of first via-holes 131, and the second end plate 12 is provided with a plurality of second via-holes 132 corresponding to the first via-holes 131 respectively. Each fastening beam assembly 13 passes through the first via-hole 131 and the corresponding second via-hole 132, so as to fix the first end plate 11, the second end plate 12 and the at least one cell module.

In the embodiments of the present disclosure, the first via-hole is formed at an edge of an end surface of the first end plate 11. The fastening beam assembly 13 is a screw rod with nuts at both ends. The screw rod passes through the first via-hole 131 and the second via-hole 132, and then the nut is screwed in so as to fasten the first end plate 11 and the second end plate 12.

In a possible embodiment of the present disclosure, the flow channel aperture is formed in an end flow channel of each of the first arch-like flow channel 24 and the second arch-like flow channel 25. An end flow channel 241 of the first arch-like flow channel 24 and an end flow channel 251 of the second arch-like flow channel 25 are arranged at upper and lower sides of the first flow channel end plate 21 respectively.

The third arch-like flow channel 26 is arranged opposite to the first arch-like flow channel 24, and the flow channel aperture in the third arch-like flow channel 26 is arranged at a position not opposite to the aperture in the first arch-like flow channel 24. The fourth arch-like flow channel 27 is arranged opposite to the second arch-like flow channel 25, and the flow channel aperture in the fourth arch-like flow channel 27 is arranged at a position not opposite to the flow channel aperture in the second arch-like flow channel 25. An inlet end 242 of the first arch-like flow channel 24 and an inlet end 265 of the third arch-like flow channel 26 are in communication with an external inlet pipe, and an outlet end 252 of the second arch-like flow channel 25 and an outlet end 271 of the fourth arch-like flow channel 27 are in communication with an external outlet pipe. Each of the first arch-like flow channel 24, the second arch-like flow channel 25, the third arch-like flow channel 26 and the fourth arch-like flow channel 27 is provided with a closed end.

In the embodiments of the present disclosure, the first flow channel end plate 21 is of a same structure as the second flow channel end plate 22. In use, after the first flow channel end plate 21 has been fixed, the second flow channel end plate 22 needs to be rotated by 180° to be arranged opposite to the first flow channel end plate 21. After the first end plate 11 is arranged opposite to the second end plate 12, the first flow channel end plate 21 is fixedly coupled to the first end plate 11 through a first positioning pin, and the second flow channel end plate 22 is fixedly coupled to the second end plate 12 through a second positioning pin.

In the embodiments of the present disclosure, the flow channel apertures are formed at the upper and lower sides of the flow channel end plate, so that the electrolyte flows from one side to the other side after it enters the at least three hermetically-assembled cell assemblies. When the flow channel aperture is arranged at a position not opposite to the other flow channel aperture, it means that an orthogonal projection of the first flow channel aperture 261 onto the second flow channel end plate 22 does not overlap with the third flow channel arch-like aperture 263, and an orthogonal projection of the second flow channel aperture 262 onto the second flow channel end plate 22 does not overlap with the fourth flow channel aperture 264, in the case that the second flow channel end plate 22 is rotated by 180° to be arranged opposite to the first flow channel end plate 21, the first arch-like flow channel 24 is arranged opposite to the third arch-like flow channel 26 and the second arch-like flow channel 25 is arranged opposite to the fourth arch-like flow channel 27.

As shown in Fig. 3, in a possible embodiment of the present disclosure, the at least three hermetically-assembled cell assemblies include a first assembly 31, a second assembly 32 hermetically assembled with the first assembly 31, and at least one third assembly 33 arranged between the first assembly 31 and the second assembly 32. The first assembly 31, the second assembly 32 and the at least one third assembly 33 are hermetically assembled. The first assembly is arranged close to, and hermetically assembled with, the first flow channel end plate 21, and the second assembly 32 is arranged closed to, and hermetically assembled with, the second flow channel end plate 22.

In the embodiments of the present disclosure, the first assembly 31 is fixedly coupled to the first flow channel end plate 21, the second assembly 32 is fixedly coupled to the second flow channel end plate 22, and the quantity of third assemblies 33 is determined according to the practical need.

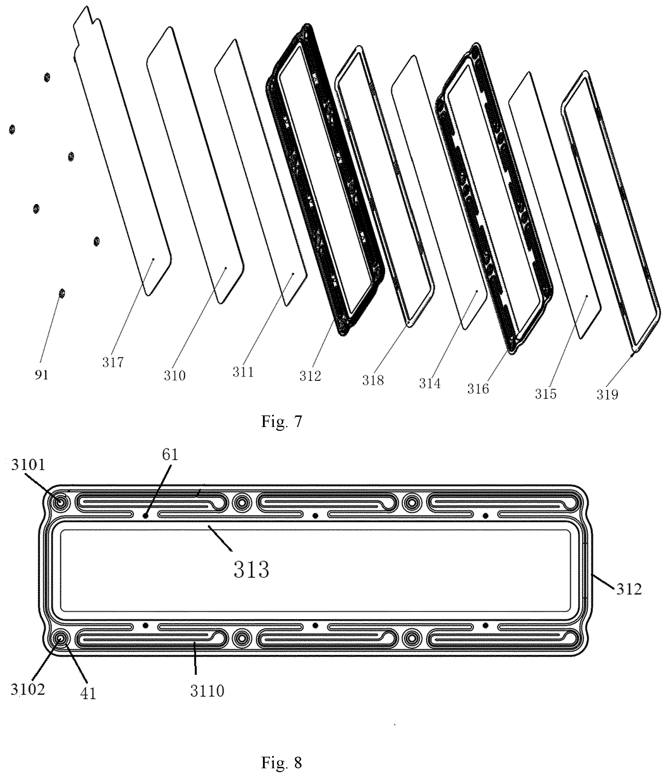

As shown in Fig. 7, in a possible embodiment of the present disclosure, the first assembly 31 includes a first bipolar plate 310, a first electrode 311, a first outer frame 312, a first separator 314, a second electrode 315, a second outer frame 316, a first inner frame 318 and a second inner frame 319. The first outer frame 312 is sleeved onto the first electrode 311, a first installation platform 313 is arranged on a first end surface of the first outer frame 312, and the first bipolar plate 310 is fixed onto the first installation platform 313. The first inner frame 318 is sleeved onto the first electrode 311, and a second end surface of the first inner frame 318 is attached to a second end surface of the first outer frame 312. The first outer frame 312 is assembled with the first inner frame 318, so as to form a plurality of first cavities in communication with the first electrode 311. The first separator 314 is arranged between the first electrode 311 and the second electrode 315, and coupled to the first electrode 311, the second electrode 315, a first end surface of the first inner frame 318 and a first end surface of the second outer frame 316. Each of the second inner frame 319 and the second outer frame 316 is sleeved onto the second electrode 315. A second end surface of the second inner frame 319 is attached to a second end surface of the second outer frame 316. The second outer frame 316 is assembled with the second inner frame 319 so as to form a plurality of second cavities in communication with the second electrode 315.

In the embodiments of the present disclosure, the first bipolar plate 310 is fixedly coupled to the first installation platform 313 through laser welding, a hot-melt film, or an adhesive. Polarity of the first electrode 311 is opposite to polarity of the second electrode 315, i.e., when the first electrode 311 is positive, the second electrode 315 is negative. The first separator 314 is fixedly coupled to the first end surface of the first inner frame 318 and the first end surface of the second outer frame 316 through laser welding, a hot-melt film, or an adhesive, so as to be fixed between the first electrode 311 and the second electrode 315. The first separator 314 is used to separate the electrolyte flowing to the first electrode 311 from the electrolyte flowing to the second electrode 315, thereby to prevent the electrolyte flowing via the first cavity to the first electrode 311 from flowing to the second electrode 315.

Through the first cavity, after the first inner frame 318 is hermetically assembled with the first outer frame 312, the electrolyte at the second end surface of the first outer frame 312 merely flows to the first electrode 311 via the first cavity. Identically, the electrolyte at the second end surface of the second outer frame 316 merely flows to the second electrode 315 via the second cavity.

As shown in Fig. 7, in a possible embodiment of the present disclosure, the first assembly 31 further includes a first current collector 317 in contact with the first bipolar plate 310.

In the embodiments of the present disclosure, the first current collector 317 is a metal foil made of copper for collecting a current. A length of the first current collector 317 needs to be greater than a length of the first outer frame 312, and one end of the first current collector 317 extends through one end of the first outer frame 312 so as to be coupled to an external power source.

In a possible embodiment of the present disclosure, all side walls on the second end surface of the first outer frame 312 and the second end surface of the second outer frame 316 are each of a double-wall structure, and all side walls on the first end surface of the first outer frame 312 and the first end surface of the second outer frame 316 are each of a single-wall structure for the hermetically assembling with the double-wall structure. The first end surface of the first outer frame 312 is fixedly coupled to the first flow channel end plate 21, the second end surface of the first outer frame 312 is fixedly coupled to the first end surface of the second outer frame 316, and the first end surface of the second outer frame 316 is fixedly coupled to the third assembly 33.

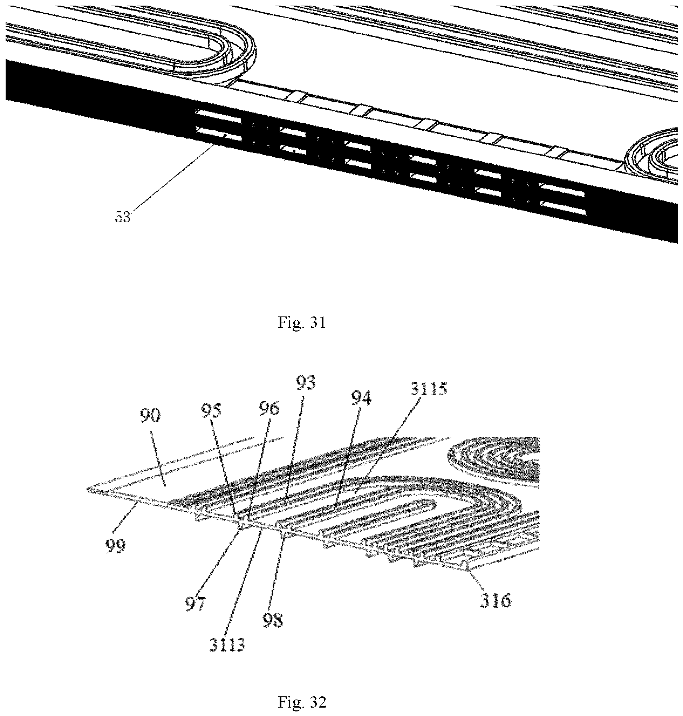

In the embodiments of the present disclosure, the double-wall structure refers to that the side wall is of a double-layer structure. Taking the second outer frame 316 as an example, as shown in Fig. 32 which is a sectional view of the second outer frame 316 at a fourth inlet flow channel 3115 and a third inlet flow channel 3113, side walls 93 and 94 at two sides of the fourth inlet flow channel 3115 are each of a double-layer structure consisting of a first side wall 95 and a second side wall 96, and a groove is formed between the first side wall 95 and the second side wall 96, where 90 represents the second end surface of the second outer frame 316, and 99 represents the first end surface of the second outer frame 316.

In Fig. 32, 3113 represents the third inlet flow channel, and 97 and 98 represent side walls at two sides of the third inlet flow channel 3113, and each of the side walls 97 and 98 is of a single-wall structure. The side wall 97 is adapted to the groove between the first side wall 95 and the second side wall 96 for hermetical engagement.

During the assembling, the second end surface of the first outer frame 312 is fixedly coupled to the first end surface of the second outer frame 316 through the single-wall structure on the first end surface of the second outer frame 316 and the double-wall structure on the second end surface of the first outer frame 312. Then, the electrolyte flows to the first electrode 311 via the plurality of first cavities, so that the entire first electrode 311 is immersed in the electrolyte quickly.

Identically, after the second end surface of the second outer frame 316 is fixedly coupled to the third assembly 33, the electrolyte flows to the second electrode 315 via the plurality of second cavities, so that the entire second electrode 315 is immersed in the electrolyte quickly.

In the embodiments of the present disclosure, a first stopping column 61 is arranged on the first end surface of the first outer frame 312, and a first stopping hole 62 is formed in the first flow channel end plate 21. The first outer frame 312 is fixedly coupled to the first flow channel end plate 21 through the first stopping column 61 and the first stopping hole 62.

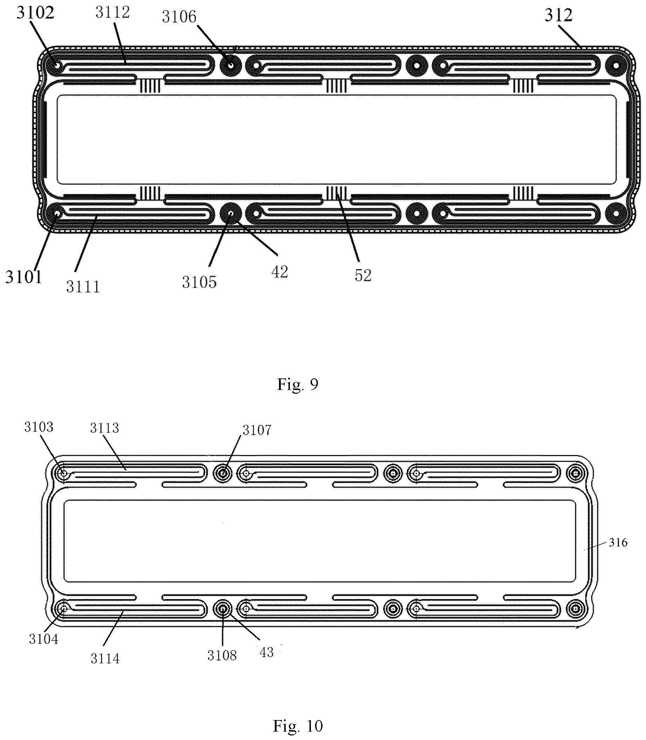

As shown in Figs. 8 to 11, in a possible embodiment of the present disclosure, the first outer frame 312 is provided with a plurality of first inlets 3101 and a plurality of first outlets 3102, and the second outer frame 316 is provided with a plurality of second inlets 3103 and a plurality of second outlets 3104. Each first inlet 3101 is in communication with a corresponding second inlet 3103, and each first outlet 3102 is in communication with a corresponding second outlet 3104. Each first inlet 3101 is arranged at a position corresponding to, and in communication with, the flow channel aperture in the first arch-like flow channel 24. The first outlet 3102 is arranged at a position corresponding to, and in communication with, the flow channel aperture in the second arch-like flow channel 25.

The second end surface of the first outer frame 312 is provided with a plurality of first electrolyte-intake blocking aperture 3105 and a plurality of first electrolyte-outtake blocking aperture 3106, and the second outer frame 316 is further provided with a plurality of inlets 3107 and a plurality of third outlets 3108. Each third inlet 3107 is in communication with a corresponding first electrolyte-intake blocking aperture 3105, and arranged at a position corresponding to the flow channel aperture in the third arch-like flow channel 26. The third outer 3108 is in communication with the first electrolyte-outtake blocking aperture 3106, and arranged at a position corresponding to the flow channel aperture in the fourth arch-like flow channel 27.

A first annular groove 41 is formed at a periphery of each of the first inlets 3101 and the first outlets 3102 in the first end surface of the first outer frame 312, a second annular groove 42 is formed at a periphery of each of the first electrolyte-intake blocking apertures 3105 and the first electrolyte-outtake blocking apertures 3106, a third annular groove 43 is formed at a periphery of each of the third inlets 3107 and the third outlets 3108 in the first end surface of the second outer frame 316, and a fourth annular groove 44 is formed at a periphery of each of the second inlets 3103 and the second outlets 3104 in the second end surface of the second outer frame 316.

In the embodiments of the present disclosure, side walls of the annular grooves in the second end surface of the first outer frame 312 and the second end surface of the second outer frame 316 are each of a double-wall structure, and side walls of the annular grooves in the first end surface of the first output frame 312 and the first end surface of the second outer frame 316 are each of a single-wall structure. Due to the first annular groove 41, after the first flow channel end plate 21, the first outer frame 312 and the second outer frame 316 are assembled together, the first flow channel aperture 261 is in direct, hermetical communication with the corresponding first inlet 3101, and the second flow channel aperture 262 is in direct, hermetical communication with the corresponding first outlet 3102. At this time, the electrolyte from the first flow channel aperture 261 flows to the second end surface, rather than the first end surface, of the first outer frame 312. Identically, the electrolyte from the first outlet 3102 flows through the second flow channel 262 to the second arch-like flow channel 25 rather than to the first end surface of the first outer frame 312. In addition, during the assembling of the first outer frame 312 with the first flow channel end plate 21, a first gasket 91 is arranged in the first annular groove 41, so as to further prevent the electrolyte from flowing to the first end surface of the first outer frame 312.

In the embodiments of the present disclosure, when the first outer frame 312 is fixedly coupled to the second outer frame 316, the second annular groove 42 and the third annular groove 43 are engaged with each other through the single-wall structure and the double-wall structure so as to form a hermetical communication channel. At this time, the first electrolyte-intake blocking aperture 3105 is in direct, hermetical communication with the third inlet 3107 via the communication channel, and the first electrolyte-outtake blocking aperture 3106 is also in direct, hermetical communication with the third outlet 3108. The first electrolyte-intake blocking aperture 3105 and the first electrolyte-outtake blocking aperture 3106 are each in a blocking state, so the electrolyte entering the third inlet 3107 and the third outlet 3108 flows merely on the second end surface of the second outer frame 316 rather than to any end surface of the first outer frame 312.

In the embodiments of the present disclosure, due to the third annular groove 44, the electrolyte on the second end surface of the second outer frame 316 does not flow through the second inlet 3103 and the second outlet 3104 to the first end surface of the second outer frame 316. In addition, the electrolyte from the first flow channel aperture 261 directly flows through the second inlet 3103 to the third assembly 33 without flowing to the second end surface of the second outer frame 316. Furthermore, the electrolyte in the third assembly 33 flows through the second outlet 3104 to the first end surface of the second outer frame 316 and directly flows through the first outlet 3102 to the second arch-like flow channel 25 without flowing to the second end surface of the second outer frame 316.

In a possible embodiment of the present disclosure, the first end surface of the first outer frame 312 is provided with a plurality of first flow channels 3110, and the second end surface of the first outer frame 312 is provided with a plurality of second inlet flow channels 3111 and a plurality of second outlet flow channels 3112. Each second inlet flow channel 3111 is in communication with one first inlet 3101 and one first cavity, and each second outlet flow channel 3112 is in communication with one first outlet 3102 and one first cavity.

The first end surface of the second outer frame 316 is provided with a plurality of third inlet flow channels 3113 and a plurality of third outlet flow channels 3114, each third inlet flow channel 3113 is in communication with one second inlet 3103, and each third outlet flow channel 3114 is in communication with one second outlet 3104.

The second end surface of the second outer frame 316 is provided with a plurality of fourth inlet flow channels 3115 and a plurality of fourth outlet flow channels 3116, each fourth inlet flow channel 3115 is in communication with one third inlet 3107 and one second cavity, and each fourth outlet flow channel 3116 is in communication with one third outlet 3108 and one second cavity.

In the embodiments of the present disclosure, side walls of the flow channels on the second end surface of the first outer frame 312 and the second end surface of the second outer frame 316 are each of a double-wall structure, and side walls of the flow channels on the first end surface of the first outer frame 312 and the first end surface of the second outer frame 316 are each of a single-wall structure. Each first flow channel 3110 on the first outer frame 312 functions as a support, so as to prevent the first outer frame 312 from being damaged during the fastening. After the first outer frame 312 has been assembled with the second outer frame 316, the second inlet flow channel 3111 is engaged with the corresponding third inlet flow channel 3113 through the single-wall structure and the double-wall structure, so as to form a first hermetical flow channel. At this time, the first inlet 3101 in the second end surface of the first outer frame 312, the second inlet 3103 in the second end surface of the second outer frame 316 and the first cavity are in communication with each other via the first hermetical flow channel, so the electrolyte from the first flow channel aperture 261 directly flows to the first electrode 311 and the second inlet 3103.

Identically, the second outlet flow channel 3112 is engaged with the corresponding third outlet flow channel 3114 to form a second hermetical flow channel. At this time, the first outlet 3102 in the second end surface of the first outer frame 312, the second outlet 3104 in the second end surface of the second outer frame 316 and the first cavity are in communication with each other via the second hermetical flow channel, so the electrolyte from the first electrode 311 merely flows through the first cavity to the first outlet 3102 or the second outlet 3104, and the electrolyte entering the first outlet 3102 directly flows to the second arch-like flow channel 25.

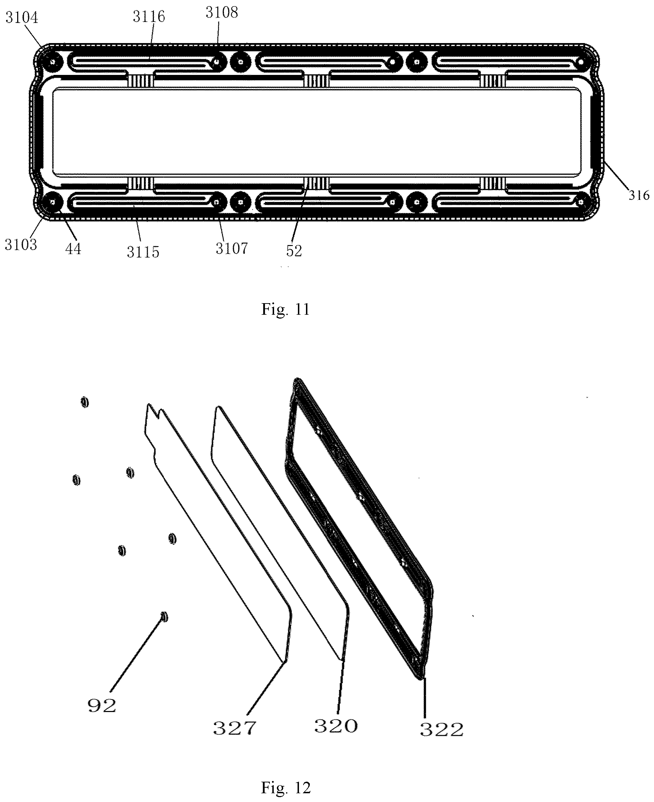

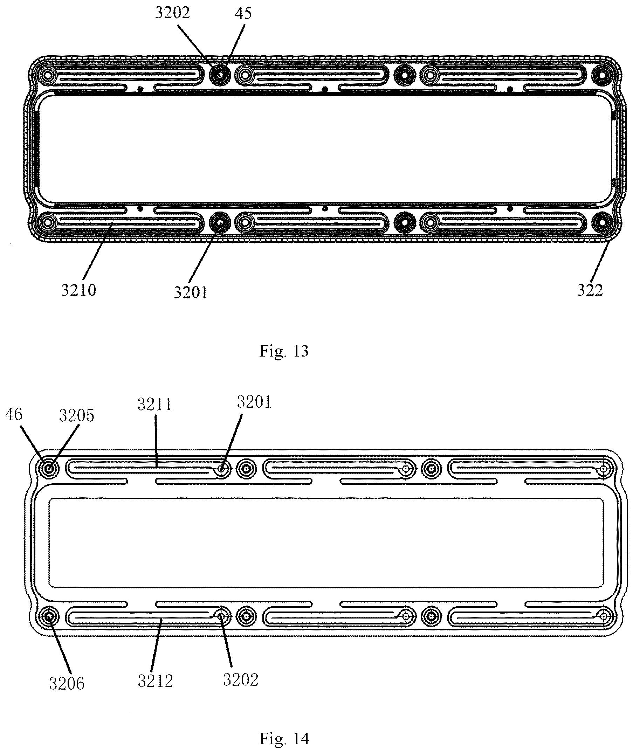

As shown in Figs. 12 to 14, in a possible embodiment of the present disclosure, the second assembly 32 includes a second bipolar plate 320, a third outer frame 322 sleeved onto the second bipolar plate 320, and a second current collector 327 in contact with the second bipolar plate 320. Side walls on a second end surface of the third outer frame 322 are each of a double-wall structure, and side walls on a first end surface of the third outer frame 322 are each of a single-wall structure adapted to the double-wall structure. The second end surface of the third outer frame 322 is fixedly coupled to the second flow channel end plate 22, and the first end surface of the third outer frame 322 is fixedly coupled to the third assembly 33.

In the embodiments of the present disclosure, the second current collector 327 is a metal foil for collecting a current, and it is arranged between the second end surface of the third outer frame 322 and the second flow channel end plate 22. A length of the second current collector 327 needs to be greater than a length of the third outer frame 322, and one end of the second current collector 327 extends through one end of the third outer frame 322 so as to be coupled to an external power source.

In the embodiments of the present disclosure, a second stopping column 63 is arranged on the second end surface of the third outer frame 322, and a corresponding second stopping hole is formed in the second flow channel end plate 22. The third outer frame 322 is fixedly coupled to the second flow channel end plate 22 through the second stopping column 63 and the second stopping hole.

In a possible embodiment of the present disclosure, the third outer frame 322 is provided with a plurality of fourth inlets 3201 and a plurality of fourth outlets 3202, and the first end surface of the third outer frame 322 is provided with a plurality of second electrolyte-intake blocking apertures 3205 and a plurality of second electrolyte-outtake blocking apertures 3206. Each fourth inlet 3201 is arranged at a position corresponding to, and in communication with, the flow channel aperture in the third arch-like flow channel 26, and each fourth outlet 3202 is arranged at a position corresponding to, and in communication with, the flow channel aperture in the fourth arch-like flow channel 27. The second electrolyte-intake blocking aperture 3205 is arranged at a position corresponding to the flow channel aperture in the first arch-like flow channel 24, and the second electrolyte-outtake blocking aperture 3206 is arranged at a position corresponding to the flow channel aperture in the second arch-like flow channel 25. A fifth annular groove 45 is formed at a periphery of each of the fourth inlets 3201 and the fourth outlets 3202 in the second end surface of the third outer frame 322, and a sixth annular groove 46 is formed at a periphery of each of the second electrolyte-intake blocking apertures 3205 and the second electrolyte-outtake blocking apertures 3206 in the first end surface of the third outer frame 322.

In the embodiments of the present disclosure, through the fifth annular groove 45 in the second end surface of the third outer frame 322, the third flow channel aperture 263 is in direct, hermetical communication with the fourth inlet 3201, and the fourth flow channel aperture 264 is in direct, hermetical communication with the fourth outlet 3202. At this time, the electrolyte from the third flow channel aperture 263 directly flows to the first end surface of the third outer frame 322 rather than to the second end surface of the third outer frame 322. Identically, the electrolyte from the fourth outlet 3202 directly flows through the fourth flow channel aperture 264 to the fourth arch-like flow channel 27 rather than to the second end surface of the third outer frame 322. In addition, during the assembling of the third outer frame 322 with the second flow channel end plate 22, a second gasket 92 is provided in the fifth annular groove 45 in the second end surface of the third outer frame 322, so as to further prevent the electrolyte from flowing to the second end surface of the third outer frame 312.

In the embodiments of the present disclosure, side walls of the annular grooves in the first end surface of the third outer frame 322 are each of a single-wall structure. Due to the second electrolyte-intake blocking aperture 3205, the second electrolyte-outtake blocking aperture 3206 and the sixth annular groove 46, after the third outer frame 322 has been assembled with the third assembly 33, the second electrolyte-intake blocking aperture 3205 and the second electrolyte-outtake blocking aperture 3206 are in direct communication with the third assembly 33. In addition, due to the blocking at the bottom, the electrolyte flowing from the third assembly 33 into the sixth annular groove 46 does not flow to any end surface of the outer frame 322.

In a possible embodiment of the present disclosure, the second end surface of the third outer frame 322 is provided with a plurality of fifth flow channels 3210, the first end surface of the third outer frame 322 is provided with a plurality of sixth inlet flow channels 3211 and a plurality of sixth outlet flow channels 3212, each sixth inlet flow channel 3211 is in communication with one fourth inlet 3201, and each sixth outlet flow channel is in communication with one fourth outlet 3202.

In the embodiments of the present disclosure, side walls of the flow channels on the first end surface of the third outer frame 322 are each of a double-wall structure. The fifth flow channel 3210 on the third outer frame 322 functions as a support, so as to prevent the third outer frame 322 from being damaged during the fastening. Due to the sixth inlet flow channel 3211, the electrolyte from the third flow channel aperture 263 merely flows to the third assembly 33, and due to the sixth outlet flow channel 3212, the electrolyte in the sixth outlet flow channel 3212 merely flows through the fourth outlet 3202 to the fourth flow channel aperture 264.

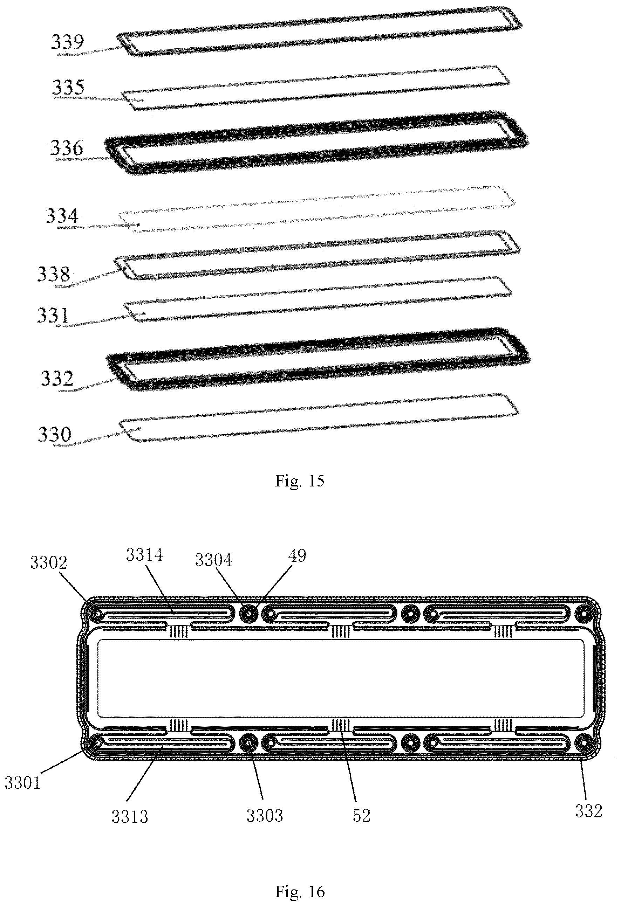

As shown in Fig. 15, in a possible embodiment of the present disclosure, the third assembly 33 includes a fourth bipolar plate 330, a fifth electrode 331, a fifth outer frame 332, a third separator 334, a sixth electrode 335, a sixth outer frame 336, a fifth inner frame 338 and a sixth inner frame 339. The fifth outer frame 332 is sleeved onto the fifth electrode 331, a first end surface of the fifth outer frame 332 is provided with a third installation platform 333, and the fourth bipolar plate 330 is fixed on the third installation platform 333. The fifth inner frame 338 is sleeved onto the fifth electrode 331, and the second end surface of the fifth inner frame 338 is attached to the second end surface of the fifth outer frame 332. The fifth outer frame 332 is assembled with the fifth inner frame 338 to form a plurality of fourth cavities in communication with the fifth electrode 331. The third separator 334 is arranged between the fifth electrode 331 and the sixth electrode 335, and coupled to the fifth electrode 331, the sixth electrode 335, the first end surface of the fifth inner frame 338 and a first end surface of the sixth outer frame 336. Each of the fifth inner frame 339 and the sixth outer frame 336 is sleeved onto the sixth electrode 335. A second end surface of the sixth inner frame 339 is attached to a second end surface of the sixth outer frame 336, and the sixth outer frame 336 is assembled with the sixth inner frame 339 to form a plurality of fifth cavities in communication with the sixth electrode 335.

In the embodiments of the present disclosure, one or more third assemblies 33 is provided. In the case of a plurality of third assemblies 33, the first end surface of the fifth outer frame 332 of the current third assembly 33 is attached to the second end surface of the sixth outer frame 336 of the previous third assembly 33.

The fourth bipolar plate 330 is fixedly coupled to the third installation platform 333 through laser welding, a hot-melt film, or an adhesive. Polarity of the fifth electrode 331 is opposite to polarity of the sixth electrode 335, and identical to the polarity of the first electrode 331. The third separator 334 is fixedly coupled to the first end surface of the fifth inner frame 338 and the sixth end surface of the second outer frame 336 through laser welding, a hot-melt film, or an adhesive, so as to be fixed between the fifth electrode 331 and the sixth electrode 335. The third separator 334 is used to separate the electrolyte flowing to the fifth electrode 331 from the electrolyte flowing to the sixth electrode 335, thereby to prevent the electrolyte flowing via the fourth cavity to the fifth electrode 331 from flowing to the sixth electrode 335.

Through the fourth cavity, after the fifth inner frame 338 is hermetically assembled with the fifth outer frame 332, the electrolyte at the second end surface of the fifth outer frame 332 merely flows to the fifth electrode 331 via the fourth cavity. Identically, the electrolyte at the second end surface of the sixth outer frame 336 merely flows to the sixth electrode 335 via the fifth cavity.

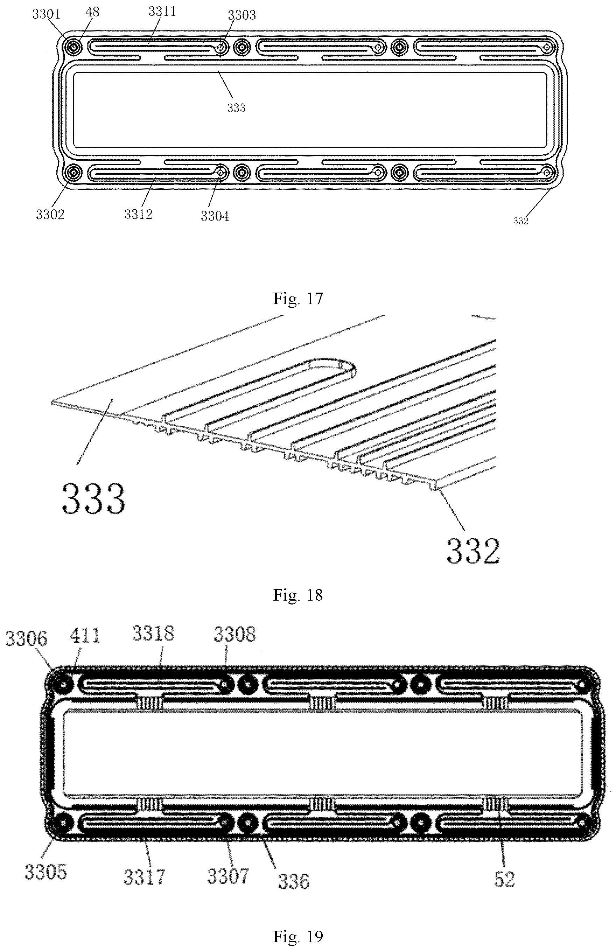

As shown in Figs. 16 to 21, in a possible embodiment of the present disclosure, side walls on the second end surface of the fifth outer frame 332 and the second end surface of the sixth outer frame 336 are each of a double-wall structure, and side walls on the first end surface of the fifth outer frame 332 and the first end surface of the sixth outer frame 336 are each of a single-wall structure adapted to the double-wall structure. The second end surface of the fifth outer frame 332 is fixedly coupled to the first end surface of the sixth outer frame 336, the first end surface of the fifth outer frame 332 is fixedly coupled to the second end surface of the second outer frame 316, and the second end surface of the sixth outer frame 336 is fixedly coupled to the first end surface of the third outer frame 322.

In the embodiments of the present disclosure, during the assembling of the cell stack of the flow battery, the second end surface of the sixth outer frame 336 is engaged with the first end surface of the third outer frame 322 through the single-wall structure and the double-wall structure. The first end surface of the sixth inner frame 339 is fixedly coupled to the second bipolar plate through laser welding, a hot-melt film or an adhesive. The second end surface of the fifth outer frame 332 is engaged with the first end surface of the sixth outer frame 336 through the single-wall structure and the double-wall structure, and the first end surface of the fifth outer frame 332 is engaged with the second end surface of the second outer frame 316 through the single-wall structure and the double-wall structure.

Identically, after the first end surface of the fifth outer frame 332 has been fixedly coupled to the second end surface of the second outer frame 316, the electrolyte on the second end surface of the second outer frame 316 flows to the fifth electrode 331 via the plurality of fourth cavities, so that the entire fifth electrode 331 is immersed in the electrolyte quickly.

Identically, after the second end surface of the sixth outer frame 336 has been fixedly coupled to the first end surface of the third outer frame 322, the electrolyte on the second end surface of the sixth outer frame 336 flows to the sixth electrode 335 via the plurality of fifth cavities, so that the entire sixth electrode 335 is immersed in the electrolyte quickly.

In a possible embodiment of the present disclosure, the fifth outer frame 332 is provided with a plurality of seventh inlets 3301, a plurality of seventh outlets 3302, a plurality of eighth inlets 3303 and a plurality of eighth outlets 3304. Each seventh inlet 3301 is arranged at a position corresponding to the flow channel aperture in the first arch-like flow channel 24, each seventh outlet 3302 is arranged at a position corresponding to the flow channel aperture in the second arch-like flow channel 25, each eighth inlet 3303 is arranged at a position corresponding to the flow channel aperture in the third arch-like flow channel 26, and each eighth outlet 3304 is arranged at a position corresponding to the flow channel aperture in the fourth arch-like flow channel 27.

The sixth outer frame 336 is provided with a ninth inlet 3305 arranged at a position corresponding to, and in communication with, the seventh inlet 3301, a ninth outlet 3306 arranged at a position corresponding to, and in communication with, the seventh outlet 3302, a tenth inlet 3307 arranged at a position corresponding to, and in communication with, the eighth inlet 3303, and a tenth outlet 3308 arranged at a position corresponding to, and in communication with, the eighth outlet 3304.

An eighth annular groove 48 is formed at a periphery of each of the seventh inlets 3301 and the seventh outlets 3302 in the first end surface of the fifth outer frame 332, a ninth annular groove 49 is formed at a periphery of each of the eighth inlets 3303 and the eighth outlets 3304 in the second end surface of the fifth outer frame 332, a tenth annular groove 410 is formed at a periphery of each of the tenth inlets 3307 and the tenth outlets 3308 in the first end surface of the sixth outer frame 336, and an eleventh annular groove 411 is formed at a periphery of each of the ninth inlets 3305 and the ninth outlets 3306 in the second end surface of the sixth outer frame 336.

In the embodiments of the present disclosure, side walls of the annular grooves in the second end surface of the fifth outer frame 332 and the second end surface of the sixth outer frame 336 are ach of a double-wall structure, and side walls of the annular grooves in the first end surface of the fifth outer frame 332 and the first end surface of the sixth outer frame 336 are each of a single-wall structure. After the assembling, due to the ninth annular groove 49 in the second end surface of the fifth outer frame 332 and the tenth annular groove 410 in the first end surface of the sixth outer frame 336, the eighth inlet 3303 is in direct, hermetical communication with the tenth inlet 3307, and the eighth outlet 3304 is in direct, hermetical communication with the tenth outlet 3308. At this time, the electrolyte on the second end surface of the sixth outer frame 336 directly flows to the first end surface of the fifth outer frame 332 rather than to the second end surface of the fifth outer frame 332 through the tenth inlet 3307 and the tenth outlet 3308.

Due to the eighth annular groove 48 in the first end surface of the fifth outer frame 332 and the fourth annular groove 44 in the second end surface of the second outer frame 316, the second inlet 3103 is in direct, hermetical communication with the seventh inlet 3301, and the second outlet 3104 is in direct, hermetical communication with the seventh outlet 3302. At this time, the electrolyte on the first end surface of the fifth outer frame 332 directly flows to the second end surface of the second outer frame 316, rather than to the first end surface of the second outer frame 316 through the seventh inlet 3301 and the seventh outlet 3302, or to the first end surface of the second outer frame 316 through the third inlet 3107 and the third outlet 3108 due to the first electrolyte-intake blocking aperture 3105 and the first electrolyte-outtake blocking aperture 3106.

Due to the eleventh annular groove 411 in the second end surface of the sixth outer frame 336 and the sixth annular groove 46 in the first end surface of the third outer frame 322, the ninth inlet 3305 is in direct, hermetical communication with the second electrolyte-intake blocking aperture 3205, and the ninth outlet 3306 is in direct, hermetical communication with the second electrolyte-outtake blocking aperture 3206. At this time, the electrolyte flows merely on the second end surface of the fifth outer frame 332, rather than to the second end surface of the sixth outer frame 336 through the ninth inlet 3305 and the ninth outlet 3306.

In the embodiments of the present disclosure, after the assembling of the cell stack of the flow battery, the first flow channel aperture 261 is in communication with the first inlet 3101, the second inlet 3103, the seventh inlet 3301, the ninth inlet 3305 and the second electrolyte-intake blocking aperture 3205.

The second channel aperture 262 is in communication with the first outlet 3102, the second outlet 3104, the seventh outlet 3302, the ninth outlet 3306 and the second electrolyte-outtake blocking aperture 3206. The second electrolyte-intake blocking aperture 3205 and the second electrolyte-outtake blocking aperture 3206 are used to block the electrolyte on the second end surface of the fifth outer frame 332 from flowing to the second end surface of the sixth outer frame 336, and merely allow the electrolyte to flow through the seventh outlet 3302 into the second arch-like flow channel 25.

The third flow channel aperture 263 is in communication with the fourth inlet 3201, the tenth inlet 3307, the eighth inlet 3303, the third inlet 3107 and the first electrolyte-intake blocking aperture 3105.

The fourth channel aperture 264 is in communication with the fourth outlet 3202, the tenth outlet 3308, the eighth outlet 3304, the third outlet 3108 and the first electrolyte-outtake blocking aperture 3106. The first electrolyte-intake blocking aperture 3105 and the first electrolyte-outtake blocking aperture 3106 are mainly used to block the third inlet 3107 and the third outlet 3108 in the first end surface of the second outer frame 316, so as to prevent the electrolyte on the second end surface of the second outer frame 316 from flowing to the first end surface of the second outer frame 316, and merely allow the electrolyte to flow through the third outlet 3108 into the fourth arch-like flow channel 27.

In a possible embodiment of the present disclosure, the first end surface of the fifth outer frame 332 is provided with a plurality of ninth inlet flow channels 3311 and a plurality of ninth outlet flow channels 3312, each ninth inlet flow channel 3311 is in communication with one eighth inlet 3303, and each ninth outlet flow channel 3312 is in communication with one eighth outlet 3304. The second end surface of the fifth outer frame 332 is provided with a plurality of tenth inlet flow channels 3313 and a plurality of tenth outlet flow channels 3314, each tenth inlet flow channel 3313 is in communication with one seventh inlet 3301 and one fourth cavity, and each tenth outlet flow channel 3314 is in communication with one seventh outlet 3302 and one fourth cavity.

The first end surface of the sixth outer frame 336 is provided with a plurality of eleventh inlet flow channels 3315 and a plurality of eleventh outlet flow channels 3316, each eleventh inlet flow channel 3315 is in communication with one ninth inlet 3305, and each eleventh outlet flow channel 3316 is in communication with one ninth outlet 3306. The second end surface of the sixth outer frame 336 is provided with a plurality of twelfth inlet flow channels 3317 and a plurality of twelfth outlet flow channels 3318, each twelfth inlet flow channel 3317 is in communication with one tenth inlet 3307 and one fifth cavity, and each twelfth outlet flow channel 3318 is in communication with one tenth outlet 3308 and one fifth cavity.

In the embodiments of the present disclosure, side walls of the flow channels on the second end surface of the fifth outer frame 332 and the second end surface of the sixth outer frame 336 are each of a double-wall structure, and side walls of the flow channels on the first end surface of the fifth outer frame 332 and the first end surface of the sixth outer frame 336 are each of a single-wall structure. During the assembling of the sixth outer frame 336 with the third outer frame 322, the twelfth inlet flow channel 3317 is engaged with the sixth inlet flow channel 3211 through the single-wall structure and the double-wall structure, so as to form a third hermetical flow channel. At this time, the tenth inlet 3307 in the second end surface of the sixth outer frame 336, the fourth inlet flow channel 3201 in the first end surface of the third outer frame 326 and fifth cavity in communication with the twelfth inlet flow channel 3317 are in communication with each other via the third hermetical flow channel, so the electrolyte from the third flow channel aperture 263 merely flows through the third hermetical flow channel to the tenth inlet 3307 and the sixth electrode 335.

Identically, the twelfth outlet flow channel 3318 is engaged with the sixth outlet flow channel 3212 to form a fourth hermetical flow channel. At this time, the tenth outlet 3308 in the second end surface of the sixth outer frame 336, the fourth outlet flow channel 3202 in the first end surface of the third outer frame 322 and the fifth cavity in communication with the twelfth outlet flow channel 3318 are in communication with each other via the fourth hermetical flow channel, so the electrolyte in the fourth hermetical flow channel merely flows into the tenth outlet 3308 and the fourth outlet flow channel 3202, and the electrolyte in the fourth outlet flow channel 3202 directly flows through the fourth flow channel aperture 364 into the fourth arch-like flow channel 27.

Identically, after the fifth outer frame 322 has been assembled with the second outer frame 316, the fifth inlet flow channel 3311 is engaged with the fourth inlet flow channel 3115 to form a fifth hermetical flow channel. At this time, the third inlet 3107 in the second end surface of the second outer frame 316, the eighth inlet 3303 in the first end surface of the fifth outer frame 322 and the second cavity in communication with the fourth inlet flow channel 3115 are in communication with each other via the fifth hermetical flow channel, so the electrolyte flowing into the fifth hermetical flow channel through the eighth inlet 3303 merely flows to the third inlet 3107 and the second electrode 315, and the electrolyte in the third inlet 3107 does not flow due to the first electrolyte-intake blocking aperture 3105.

Identically, the ninth outlet flow channel 3312 is engaged with the fourth outlet flow channel 3116 to form a sixth hermetical flow channel. At this time, the third outlet 3108 in the second end surface of the second outer frame 316, the eighth outlet 3304 in the first end surface of the fifth outer frame 322 and the second cavity in communication with the fourth outlet flow channel 3116 are in communication with each other via the sixth hermetical flow channel, so the electrolyte flowing from the second electrode 315 into the sixth hermetical flow channel merely flows into the third outlet 3108 and the eighth outlet 3304, the electrolyte in the third outlet 3108 does not flow due to the first electrolyte-outtake blocking aperture 3106, and the electrolyte in the eighth outlet 3304 directly flows through the fourth flow channel aperture 264 into the second arch-like flow channel 27.

Identically, after the assembling of the fifth outer frame 332 with the sixth outer frame 336, the tenth inlet flow channel 3313 is engaged with the eleventh inlet flow channel 3315 to form a seventh hermetical flow channel. At this time, the seventh inlet 3301 in the second end surface of the fifth outer frame 332, the ninth inlet 3305 in the first end surface of the sixth outer frame 336 and the fourth cavity in communication with the tenth inlet flow channel 3313 are in communication with each other via the seventh hermetical flow channel, so the electrolyte flowing through the seventh inlet 3301 into the seventh hermetical flow channel merely flows to the ninth inlet 3305 and the fifth electrode 331, and the electrolyte in the ninth inlet 3305 does not flow due to the second electrolyte-intake blocking aperture 3205.

Identically, the tenth outlet flow channel 3314 is engaged with the eleventh outlet flow channel 3316 to form an eighth hermetical flow channel. At this time, the seventh outlet 3302 in the second end surface of the fifth outer frame 332, the ninth outlet 3306 in the first end surface of the sixth outer frame 336 and the fourth cavity in communication with the tenth outlet flow channel 3313 are in communication with each other via the eighth hermetical flow channel, so the electrolyte flowing from the fifth electrode 331 into the eighth hermetical flow channel merely flows into the ninth outlet 3306 and the seventh outlet 3302, the electrolyte in the ninth outlet 3306 does not flow due to the second electrolyte-outtake blocking aperture 3206, and the electrolyte in the seventh outlet 3302 directly flows through the second flow channel aperture 262 into the second arch-like flow channel 25.

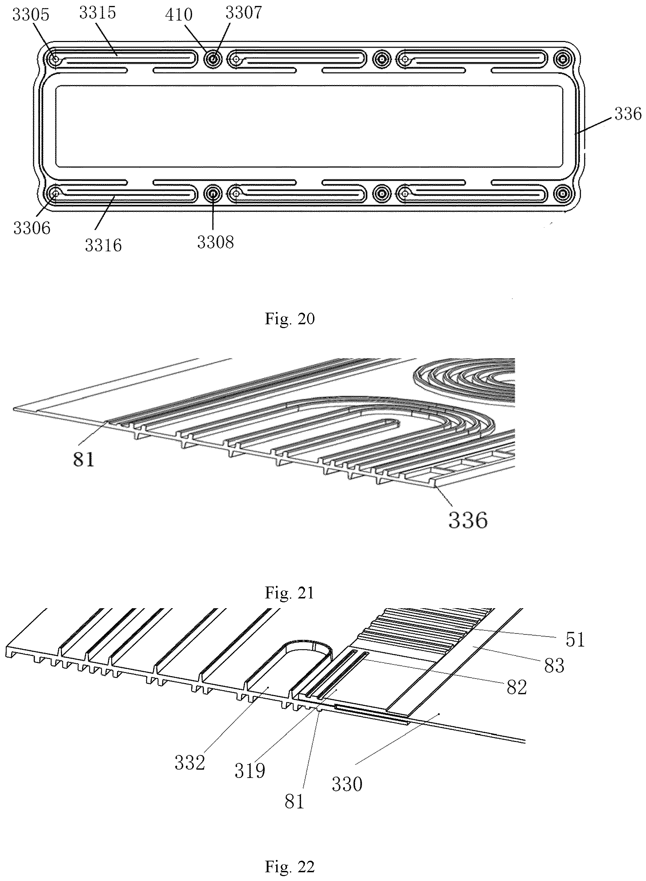

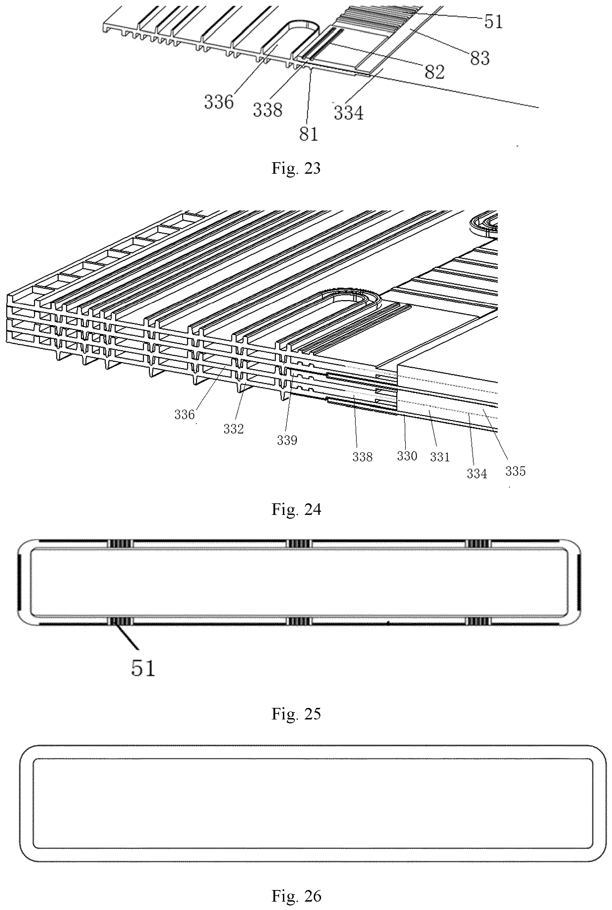

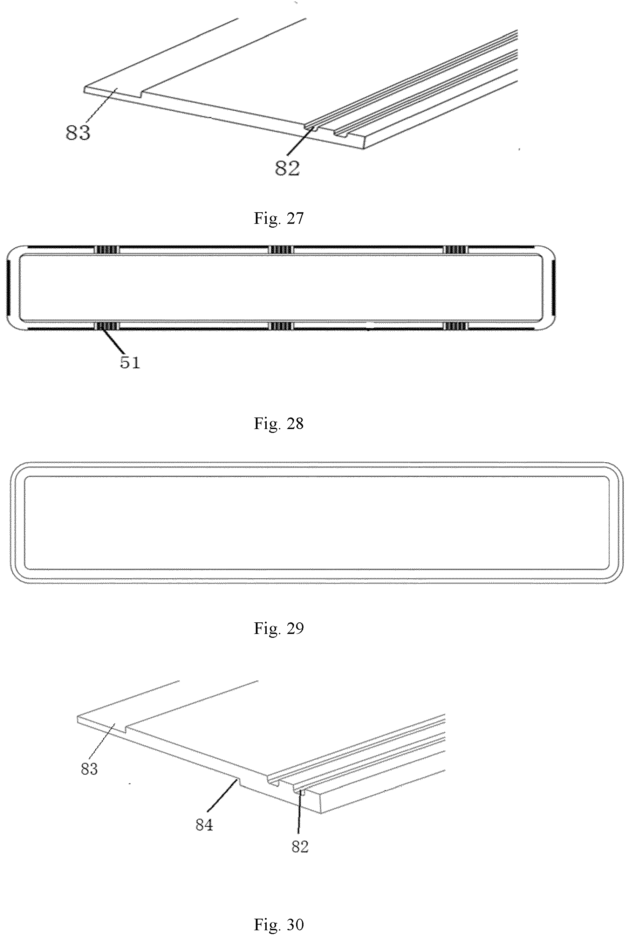

As shown in Figs. 22 to 31, in a possible embodiment of the present disclosure, each of the first cavity, the second cavity, the fourth cavity and the fifth cavity includes a first groove 51 and a second groove 52. The first groove is formed in each of the second end surface of the first inner frame 318, the second end surface of the second inner frame 319, the second end surface of the fifth inner frame 338 and the second end surface of the sixth inner frame 339, and the second groove 52 matching the first groove 51 is formed in each of the second end surface of the first outer frame 312, the second end surface of the second outer frame 316, the second end surface of the fifth outer frame 332 and the second end surface of the sixth outer frame 336.

In the embodiments of the present disclosure, each of the first cavity, the second cavity, the fourth cavity and the fifth cavity is formed through the first groove 51 and the second groove 52. In Fig. 31, 53 represents the cavity formed through the first groove 51 and the second groove 52, and the cavity is in communication with the electrode, so that the electrolyte flows via the cavity to the electrode.

In the embodiments of the present disclosure, the first inner frame 318 is of a completely same structure as the fifth inner frame 338, the sixth inner frame 339 is of a completely same structure as the second inner frame 319, and a groove 84 for fixing the bipolar plate is formed in each of the first end surface of the sixth inner frame 339 and the first end surface of the second inner frame 319.

In a possible embodiment of the present disclosure, the inner frames and the outer frames are made of polypropylene, and the flow channel end plates are made of polyvinyl chloride. A first stopping groove 82 is further formed in the second end surface of each inner frame, and a first stopping rib 81 is formed on the second end surface of each outer frame. The outer frame is assembled with the corresponding outer frame through the engagement of the first stopping groove 82 with the first stopping rib 81, so as to prevent the displacement of the inner frame and the outer frame. Each inner frame is further provided with a buffer table 83 between the cavity and the electrode, so as to reduce a flow rate of the electrolyte from the cavity, thereby to reduce an impact on the electrode.

A specific working principle of the cell stack of the flow battery will be described hereinafter. When the first electrode 311 is positive, the fifth electrode 331 is positive too, and the second electrode 315 and the sixth electrode 335 are negative. At this time, the positive electrolyte is injected into the first arch-like flow channel 24, and the negative electrolyte is injected into the third arch-like flow channel 26. After the positive electrolyte from the first flow channel aperture 261 flows to the second end surface of the first outer frame 312 and the second end surface of the fifth outer frame 332 through the first inlet 3101 and the seventh inlet 3301 respectively, and flows to the first electrode 311 and the fifth electrode 331 through the first hermetical flow channel and the seventh hermetical flow channel respectively. Next, the positive electrolyte flows into the second hermetical flow channel and the eighth hermetical flow channel, and flows to the second arch-like flow channel 25 through the first outlet 3102 and the seventh outlet 3302.

**In** addition, the negative electrolyte from the third flow channel aperture 263 merely flows to the second end surface of the sixth outer frame 336 and the second end surface of the second outer frame 316 through the fourth inlet 3201 and the eighth inlet 3303 respectively, and flows to the sixth electrode 335 and the second electrode 315 through the third hermetical flow channel and the fifth hermetical flow channel respectively. Next, the negative electrolyte flows into the fourth hermetical flow channel and the sixth hermetical flow channel, and then flows into the fourth arch-like flow channel 27 through the fourth outlet 3202 and the eighth outlet 3304.

The second electrode 315 and the sixth electrode 335 are immersed in the electrolyte, and then the electrolyte flows into the fourth arch-like flow channel 27 through the tenth outlet 3308 and the third outlet 3108.

According to the cell stack of the flow battery in the embodiments of the present disclosure, the electrolyte flows to the electrode at a large flow through increasing the quantity of the inlet flow channels and the outlet flow channels in the case that the electrode is too long. As a result, in the case of same power and a same area of the electrode, it is able to reduce a flow resistance of the electrolyte through increasing a length of the electrode and decreasing a width of the electrode, and reduce the power consumption of a pump, thereby to increase the electric energy conversion efficiency.

The present disclosure further provides in some embodiments a flow battery which includes at least one of the above-mentioned cell stack.

According to the flow battery in the embodiments of the present disclosure, it is able to increase the power through a plurality of cell stacks, thereby to meet the requirement on the large power.

The above embodiments are for illustrative purposes only, but the present disclosure is not limited thereto. Obviously, a person skilled in the art may make further modifications and improvements, the scope of the invention is defined by the claims.

## Claims

1. A cell stack of a flow battery, comprising:a first end plate (11); a second end plate (12); and at least one cell module arranged between the first end plate (11) and the second end plate (12), wherein each cell module comprises a first flow channel end plate (21), a second flow channel end plate (22) arranged opposite to the first flow channel end plate (21), and single-cell assemblies arranged between the first flow channel end plate (21) and the second flow channel end plate (22), wherein the single-cell assemblies comprise at least three hermetically-assembled cell assemblies, the first flow channel end plate (21) is provided with a first arch-like flow channel (24) and a second arch-like flow channel (25);the second flow channel end plate (22) is provided with a third arch-like flow channel (26) and a fourth arch-like flow channel (27);
each of the first arch-like flow channel (24), the second arch-like flow channel (25), the third arch-like flow channel (26) and the fourth arch-like flow channel (27) is provided with a flow channel aperture (261, 262, 263, 264);
**characterized in that** each flow channel aperture (261, 262, 263, 264) is in communication with the at least three hermetically-assembled cell assemblies;an electrolyte in the first arch-like flow channel (24) flows through the at least three hermetically-assembled cell assemblies via the flow channel aperture (261) in the first arch-like flow channel (24) to the second arch-like flow channel (25); and
an electrolyte in the third arch-like flow channel (26) flows through the at least three hermetically-assembled cell assemblies via the flow channel aperture (261, 262, 263, 264) in the third arch-like flow channel (26) to the fourth arch-like flow channel (27).

2. The cell stack according to claim 1, wherein the flow channel aperture (261, 262, 263, 264) is formed in an end flow channel (241, 251) of each of the first arch-like flow channel (24), the second arch-like flow channel (25), the third arch-like flow channel (26) and the fourth arch-like flow channel (27);
an end flow channel (241, 251) of the first arch-like flow channel (24) and an end flow channel (241, 251) of the second arch-like flow channel (25) are arranged at upper and lower sides of the first flow channel end plate (21) respectively;
the third arch-like flow channel (26) is arranged opposite to the first arch-like flow channel (24), and the flow channel aperture (261, 262, 263, 264) in the third arch-like flow channel (26) is arranged at a position not opposite to the aperture (261, 262, 263, 264) in the first arch-like flow channel (24);
the fourth arch-like flow channel (27) is arranged opposite to the second arch-like flow channel (25), and the flow channel aperture (261, 262, 263, 264) in the fourth arch-like flow channel (27) is arranged at a position not opposite to the flow channel aperture (261, 262, 263, 264) in the second arch-like flow channel (25);
an inlet end (242) of the first arch-like flow channel (24) and an inlet end (265) of the third arch-like flow channel (26) are in communication with an external inlet pipe;
an outlet end (252) of the second arch-like flow channel (25) and an outlet end (271) of the fourth arch-like flow channel (27) are in communication with an external outlet pipe; and
each of the first arch-like flow channel (24), the second arch-like
flow channel (25), the third arch-like flow channel (26) and the fourth arch-like flow channel (27) is provided with a closed end.

3. The cell stack according to claim 1, wherein the at least three hermetically-assembled cell assemblies comprise a first assembly (31), a second assembly (32) hermetically assembled with the first assembly (31), and at least one third assembly (33) arranged between the first assembly (31) and the second assembly (32);
the first assembly (31), the second assembly (32) and the at least one third assembly (33) are hermetically assembled; and
the first assembly (31) is arranged close to, and hermetically assembled with, the first flow channel end plate (21), and the second assembly (32) is arranged closed to, and hermetically assembled with, the second flow channel end plate (22).

4. The cell stack according to claim 3, wherein the first assembly (31) comprises a first bipolar plate (310), a first electrode (311), a first outer frame (312), a first separator (314), a second electrode (315), a second outer frame (316), a first inner frame (318) and a second inner frame (319);
the first outer frame (312) is sleeved onto the first electrode (311), a first installation platform (313) is arranged on a first end surface of the first outer frame (312), and the first bipolar plate (310) is fixed onto the first installation platform (313);
the first inner frame (318) is sleeved onto the first electrode (311), and a second end surface of
the first inner frame (318) is attached to a second end surface of the first outer frame (312);
the first outer frame (312) is assembled with the first inner frame (318), so as to form a plurality of first cavities in communication with the first electrode (311);
the first separator (314) is arranged between the first electrode (311) 311 and the second electrode (315), and coupled to the first electrode (311), the second electrode (315), a first end surface of the first inner frame (318) and a first end surface of the second outer frame (316); each of the second inner frame (319) and the second outer frame (316) is sleeved onto the second electrode (315);
a second end surface of the second inner frame (319) is attached to a second end surface of the second outer frame (316);
the second outer frame (316) is assembled with the second inner frame (319) so as to form a plurality of second cavities in communication with the second electrode (315); and
the first end surface of the first outer frame (312) is fixedly coupled to the first flow channel end plate (21), the second end surface of the first outer frame (312) is fixedly coupled to the first end surface of the second outer frame (316), and the first end surface of the second outer frame (316) is fixedly coupled to the third assembly (33).

5. The cell stack according to claim 4, wherein the first outer frame (312) is provided with a plurality of first inlets (3101) and a plurality of first outlets (3102), and the second outer frame (316) is provided with a plurality of second inlets (3103) and a plurality of second outlets (3104);
each first inlet (3101) is in communication with a corresponding second inlet (3103), and each first outlet (3102) is in communication with a corresponding second outlet (3104);
each first inlet (3101) is arranged at a position corresponding to, and in communication with, the flow channel aperture (261, 262, 263, 264) in the first arch-like flow channel (24);
the first outlet (3102) is arranged at a position corresponding to, and in communication with, the flow channel aperture (261, 262, 263, 264) in the second arch-like flow channel (25);
the second end surface of the first outer frame (312) is provided with a plurality of first electrolyte-intake blocking aperture (3205) and a plurality of first electrolyte-outtake blocking aperture (3206);
the second outer frame (316) is further provided with a plurality of inlets (3107) and a plurality of third outlets (3108);
each third inlet (3107) is in communication with a corresponding first electrolyte-intake blocking aperture (3205), and arranged at a position corresponding to the flow channel aperture (261, 262, 263, 264) in the third arch-like flow channel (26); and
the third outer (3108) is in communication with the first electrolyte-outtake blocking aperture (3206), and arranged at a position corresponding to the flow channel aperture (261, 262, 263, 264) in the fourth arch-like flow channel (27).

6. The cell stack according to claim 5, wherein a first annular groove (41) is formed at a periphery of each of the first inlets (3101) and the first outlets (3102) in the first end surface of the first outer frame (312);
a second annular groove (42) is formed at a periphery of each of the first electrolyte-intake blocking apertures and the first electrolyte-outtake blocking apertures;
a third annular groove (43) is formed at a periphery of each of the third inlets (3107) and the third outlets (3108) in the first end surface of the second outer frame (316); and
a fourth annular groove (44) is formed at a periphery of each of the second inlets (3103) and the second outlets (3104) in the second end surface of the second outer frame (3166).

7. The cell stack according to claim 5, wherein the first end surface of the first outer frame (312) is provided with a plurality of first flow channels (3110), and the second end surface of the first outer frame (312) is provided with a plurality of second inlet flow channels (3111) and a plurality of second outlet flow channels (3112);
each second inlet flow channel (3111) is in communication with one first inlet (3101) and one first cavity; and
each second outlet flow channel (3112) is in communication
with one first outlet (3102) and one first cavity.

8. The cell stack according to claim 5, wherein the first end surface of the second outer frame (316) is provided with a plurality of third inlet flow channels (3113) and a plurality of third outlet flow channels (3114), each third inlet flow channel (3113) is in communication with one second inlet (3103), and each third outlet flow channel (3114) is in communication with one second outlet (3104); and
the second end surface of the second outer frame (316) is provided with a plurality of fourth inlet flow channels (3115) and a plurality of fourth outlet flow channels (3116), each fourth inlet flow channel (3115) is in communication with one third inlet (3107) and one second cavity, and each fourth outlet flow channel (3116) is in communication with one third outlet (3108) and one second cavity.

9. The cell stack according to claim 4, wherein the second assembly (32) comprises a second bipolar plate (320), a third outer frame (322) sleeved onto the second bipolar plate (320), and a second current collector (327) in contact with the second bipolar plate (320), wherein the second end surface of the third outer frame (322) is fixedly coupled to the second flow channel end plate (22), and the first end surface of the third outer frame (322) is fixedly coupled to the third assembly (33).

10. The cell stack according to claim 9, wherein the third outer frame (322) is provided with a plurality of fourth inlets (3201) and a plurality of fourth outlets (3202), and the first end surface of the third outer frame (322) is provided with a plurality of second electrolyte-intake blocking apertures and a plurality of second electrolyte-outtake blocking apertures;
each fourth inlet (3201) is arranged at a position corresponding to, and in communication with, the flow channel aperture (263) in the third arch-like flow channel (26), and each fourth outlet (3202) is arranged at a position corresponding to, and in communication with, the flow channel aperture (261, 262, 263, 264) in the fourth arch-like flow channel (27); and
the second electrolyte-intake blocking aperture (3205) is arranged at a position corresponding to the flow channel aperture (261, 262, 263, 264) in the first arch-like flow channel (24), and the second electrolyte-outtake blocking aperture (3206) is arranged at a position corresponding to the flow channel aperture (261, 262, 263, 264) in the second arch-like flow channel (25).

11. The cell stack according to claim 10, wherein a fifth annular groove (45) is formed at a periphery of each of the fourth inlets (3201) and the fourth outlets (3202) in the second end surface of the third outer frame (322), and a sixth annular groove (46) is formed at a periphery of each of the second electrolyte-intake blocking apertures and the second electrolyte-outtake blocking apertures in the first end surface of the third outer frame (322).

12. The cell stack according to claim 11, wherein the second end surface of the third outer frame (322) is provided with a plurality of fifth flow channels (3210), the first end surface of the third outer frame (322) is provided with a plurality of sixth inlet flow channels (3211) and a plurality of sixth outlet flow channels (3212), each sixth inlet flow channel (3211) is in communication with one fourth inlet (3201), and each sixth outlet flow channel (3212) is in communication with one fourth outlet (3202).

13. The cell stack according to claim 9, wherein the third assembly (33) comprises a fourth bipolar plate (330), a fifth electrode (331), a fifth outer frame (332), a third separator (334), a sixth electrode (335), a sixth outer frame (336), a fifth inner frame (338) and a sixth inner frame (339);
the fifth outer frame (332) is sleeved onto the fifth electrode (331), a first end surface of the fifth outer frame (332) is provided with a third installation platform (333), and the fourth bipolar plate (330) is fixed on the third installation platform (333);
the fifth inner frame (338) is sleeved onto the fifth electrode (331), and the second end surface of the fifth inner frame (338) is attached to the second end surface of the fifth outer frame (332);
the fifth outer frame (332) is assembled with the fifth inner frame (338) to form a plurality of fourth cavities in communication with the fifth electrode (331);
the third separator (334) is arranged between the fifth electrode (331) and the sixth electrode (335), and coupled to the fifth electrode (331), the sixth electrode (335), the first end surface of the fifth inner frame (338) and a first end surface of the sixth outer frame (336);
each of the fifth inner frame (338) and the sixth outer frame (336) is sleeved onto the sixth electrode (335);
a second end surface of the sixth inner frame (339) is attached to a second end surface of the sixth outer frame (336), and the sixth outer frame (336) is assembled with the sixth inner frame (339) to form a plurality of fifth cavities in communication with the sixth electrode (335); and
the second end surface of the fifth outer frame (332) is fixed coupled to the first end surface of the sixth outer frame (336), the first end surface of the fifth outer frame (332) is fixedly coupled to the second end surface of the second outer frame (316), and the second end surface of the sixth outer frame (336) is fixedly coupled to the first end surface of the third outer frame (322).

14. The cell stack according to claim 13, wherein the fifth outer frame (332) is provided with a plurality of seventh inlets (3301), a plurality of seventh outlets (3302), a plurality of eighth inlets (3303) and a plurality of eighth outlets (3304), each seventh inlet (3301) is arranged at a position corresponding to the flow channel aperture (261, 262, 263, 264) in the first arch-like flow channel (24), each seventh outlet (3302) is arranged at a position corresponding to the flow channel aperture (261, 262, 263, 264) in the second arch-like flow channel (25), each eighth inlet (3303) is arranged at a position corresponding to the flow channel aperture (261, 262, 263, 264) in the third arch-like flow channel (26),
and each eighth outlet (3304) is arranged at a position corresponding to the flow channel aperture (261, 262, 263, 264) in the fourth arch-like flow channel (27).

15. A flow battery comprising the cell stack according to any one of claims 1 to 14.

## Patentansprüche

1. Zellstapel einer Durchflussbatterie, umfassend: eine erste Endplatte (11); eine zweite Endplatte (12); und wenigstens ein Zellmodul, das zwischen der ersten Endplatte (11) und der zweiten Endplatte (12) angeordnet ist, wobei jedes Zellmodul eine erste Durchflusskanal-Endplatte (21), eine zweite Durchflusskanal-Endplatte (22), die gegenüber der ersten Durchflusskanal-Endplatte (21) angeordnet ist, und Einzelzellenbaugruppen, die zwischen der ersten Durchflusskanal-Endplatte (21) und der zweiten Durchflusskanal-Endplatte (22) angeordnet sind, umfasst, wobei die Einzelzellenbaugruppen wenigstens drei hermetisch montierte Zellenbaugruppen umfassen, die erste Durchflusskanal-Endplatte (21) mit einem ersten bogenförmigen Durchflusskanal (24) und einem zweiten bogenförmigen Durchflusskanal (25) versehen ist; die zweite Durchflusskanal-Endplatte (22) mit einem dritten bogenförmigen Durchflusskanal (26) und einem vierten bogenförmigen Durchflusskanal (27) versehen ist;
der erste bogenförmige Durchflusskanal (24), der zweite bogenförmige Durchflusskanal (25), der dritte bogenförmige Durchflusskanal (26) und der vierte bogenförmige Durchflusskanal (27) jeweils mit einer Durchflusskanalöffnung (261, 262, 263, 264) versehen sind;
**dadurch gekennzeichnet, dass** jede Durchflusskanalöffnung (261, 262, 263, 264) mit den wenigstens drei hermetisch montierten Zellenbaugruppen kommuniziert; ein Elektrolyt in dem ersten bogenförmigen Durchflusskanal (24) über die Durchflusskanalöffnung (261) in dem ersten bogenförmigen Durchflusskanal (24) durch die wenigstens drei hermetisch montierten Zellenbaugruppen zu dem zweiten bogenförmigen Durchflusskanal (25) strömt; und
ein Elektrolyt in dem dritten bogenförmigen Durchflusskanal (26) über die Durchflusskanalöffnung (261, 262, 263, 264) in dem dritten bogenförmigen Durchflusskanal (26) durch die wenigstens drei hermetisch montierten Zellenbaugruppen zu dem vierten bogenförmigen Durchflusskanal (27) strömt.

2. Zellstapel gemäß Anspruch 1, wobei die Durchflusskanalöffnung (261, 262, 263, 264) in einem Enddurchflusskanal (241, 251) jeweils des ersten bogenförmigen Durchflusskanals (24), des zweiten bogenförmigen Durchflusskanals (25), des dritten bogenförmigen Durchflusskanals (26) und des vierten bogenförmigen Durchflusskanals (27) ausgebildet ist;
ein Enddurchflusskanal (241, 251) des ersten bogenförmigen Durchflusskanals (24) und ein Enddurchflusskanal (241, 251) des zweiten bogenförmigen Durchflusskanals (25) jeweils an der oberen und unteren Seite der ersten Durchflusskanal-Endplatte (21) angeordnet sind;
der dritte bogenförmige Durchflusskanal (26) gegenüber dem ersten bogenförmigen Durchflusskanal (24) angeordnet ist und die Durchflusskanalöffnung (261, 262, 263, 264) in dem dritten bogenförmigen Durchflusskanal (26) in einer Position angeordnet ist, die der Öffnung (261, 262, 263, 264) in dem ersten bogenförmigen Durchflusskanal (24) nicht gegenüber ist;
der vierte bogenförmige Durchflusskanal (27) gegenüber dem zweiten bogenförmigen Durchflusskanal (25) angeordnet ist und die Durchflusskanalöffnung (261, 262, 263, 264) in dem vierten bogenförmigen Durchflusskanal (27) in einer Position angeordnet ist, die der Durchflusskanalöffnung (261, 262, 263, 264) in dem zweiten bogenförmigen Durchflusskanal (25) nicht gegenüber ist;
ein Einlassende (242) des ersten bogenförmigen Durchflusskanals (24) und ein Einlassende (265) des dritten bogenförmigen Durchflusskanals (26) mit einem externen Einlassrohr kommunizieren;
ein Auslassende (252) des zweiten bogenförmigen Durchflusskanals (25) und ein Auslassende (271) des vierten bogenförmigen Durchflusskanals (27) mit einem externen Auslassrohr kommunizieren; und
der erste bogenförmige Durchflusskanal (24), der zweite bogenförmige Durchflusskanal (25), der dritte bogenförmige Durchflusskanal (26) und der vierte bogenförmige Durchflusskanal (27) jeweils mit einem geschlossenen Ende versehen sind.

3. Zellstapel gemäß Anspruch 1, wobei die wenigstens drei hermetisch montierten Zellbaugruppen eine erste Baugruppe (31), eine zweite Baugruppe (32), die mit der ersten Baugruppe (31) hermetisch montiert ist, und wenigstens eine dritte Baugruppe (33), die zwischen der ersten Baugruppe (31) und der zweiten Baugruppe (32) angeordnet ist, umfassen;
die erste Baugruppe (31), die zweite Baugruppe (32) und die wenigstens eine dritte Baugruppe (33) hermetisch montiert sind; und
die erste Baugruppe (31) in der Nähe der ersten Durchflusskanal-Endplatte (21) angeordnet und hermetisch an diese montiert ist; und die zweite Baugruppe (32) in der Nähe der zweiten Durchflusskanal-Endplatte (22) angeordnet und hermetisch an diese montiert ist.

4. Zellstapel gemäß Anspruch 3, wobei die erste Baugruppe (31) eine erste bipolare Platte (310), eine erste Elektrode (311), ein erstes äußeres Gerüst (312), einen ersten Separator (314), eine zweite Elektrode (315), ein zweites äußeres Gerüst (316), ein erstes inneres Gerüst (318) und ein zweites inneres Gerüst (319) umfasst;
das erste äußere Gerüst (312) über die erste Elektrode (311) gestülpt ist, eine erste Montageplattform (313) auf einer ersten Endfläche des ersten äußeren Gerüsts (312) angeordnet ist und die erste bipolare Platte (310) auf der ersten Montageplattform (313) fixiert wird;
das erste innere Gerüst (318) über die erste Elektrode (311) gestülpt ist und eine zweite Endfläche des ersten inneren Gerüsts (318) an einer zweiten Endfläche des ersten äußeren Gerüsts (312) befestigt ist;
das erste äußere Gerüst (312) so an das erste innere Gerüst (318) montiert ist, dass eine Vielzahl von ersten Hohlräumen in Kommunikation mit der ersten Elektrode (311) entsteht;
der erste Separator (314) zwischen der ersten Elektrode (311) und der zweiten Elektrode (315) angeordnet ist und an die erste Elektrode (311), die zweite Elektrode (315), eine erste Endfläche des ersten inneren Gerüsts (318) und eine erste Endfläche des zweiten äußeren Gerüsts (316) gekoppelt ist;
das zweite innere Gerüst (319) und das zweite äußere Gerüst (316) jeweils über die zweite Elektrode (315) gestülpt sind;
eine zweite Endfläche des zweiten inneren Gerüsts (319) an einer zweiten Endfläche des zweiten äußeren Gerüsts (316) befestigt ist;
das zweite äußere Gerüst (316) so an das zweite innere Gerüst (319) montiert ist, dass eine Vielzahl von zweiten Hohlräumen in Kommunikation mit der zweiten Elektrode (315) entsteht; und
die erste Endfläche des ersten äußeren Gerüsts (312) fest an die erste Durchflusskanal-Endplatte (21) gekoppelt ist, die zweite Endfläche des ersten äußeren Gerüsts (312) fest an die erste Endfläche des zweiten äußeren Gerüsts (316) gekoppelt ist und die erste Endfläche des zweiten äußeren Gerüsts (316) fest an die dritte Baugruppe (33) gekoppelt ist.

5. Zellstapel gemäß Anspruch 4, wobei das erste äußere Gerüst (312) mit einer Vielzahl von ersten Einlässen (3101) und einer Vielzahl von ersten Auslässen (3102) versehen ist und das zweite äußere Gerüst (316) mit einer Vielzahl von zweiten Einlässen (3103) und einer Vielzahl von zweiten Auslässen (3104) versehen ist;
jeder erste Einlass (3101) mit einem entsprechenden zweiten Einlass (3103) kommuniziert und jeder erste Auslass (3102) mit einem entsprechenden zweiten Auslass (3104) kommuniziert;
jeder erste Einlass (3101) in einer Position angeordnet ist, die der Durchflusskanalöffnung (261, 262, 263, 264) im ersten bogenförmigen Durchflusskanal (24) entspricht und mit dieser kommuniziert;
der erste Auslass (3102) in einer Position angeordnet ist, die der Durchflusskanalöffnung (261, 262, 263, 264) im zweiten bogenförmigen Durchflusskanal (25) entspricht und mit dieser kommuniziert;
die zweite Endfläche des ersten äußeren Gerüsts (312) mit einer Vielzahl von ersten Elektrolytzufuhr-Blockierungsöffnungen (3205) und einer Vielzahl von ersten Elektrolytabgabe-Blockierungsöffnungen (3206) versehen ist;
das zweite äußere Gerüst (316) weiterhin mit einer Vielzahl von Einlässen (3107) und einer Vielzahl von dritten Auslässen (3108) versehen ist;
die dritten Einlässe (3107) jeweils mit einer entsprechenden ersten Elektrolytzufuhr-Blockierungsöffnung (3205) kommunizieren und in einer Position angeordnet sind, die der Durchflusskanalöffnung (261, 262, 263, 264) im dritten bogenförmigen Durchflusskanal (26) entspricht; und
der dritte Auslass (3108) mit der ersten Elektrolytabgabe-Blockierungsöffnung (3206) kommuniziert und in einer Position angeordnet ist, die der Durchflusskanalöffnung (261, 262, 263, 264) im vierten bogenförmigen Durchflusskanal (27) entspricht.

6. Zellstapel gemäß Anspruch 5, wobei am Rand jedes der ersten Einlässe (3101) und der ersten Auslässe (3102) in der ersten Endfläche des ersten äußeren Gerüsts (312) eine erste Ringnut (41) ausgebildet ist;
am Rand jedes der ersten Elektrolytzufuhr-Blockierungsöffnungen und der ersten Elektrolytabgabe-Blockierungsöffnungen eine zweite Ringnut (42) ausgebildet ist;
am Rand jedes der dritten Einlässe (3107) und der dritten Auslässe (3108) in der ersten Endfläche des zweiten äußeren Gerüsts (316) eine dritte Ringnut (43) ausgebildet ist; und
am Rand jedes der zweiten Einlässe (3103) und der zweiten Auslässe (3104) in der zweiten Endfläche des zweiten äußeren Gerüsts (3166) eine vierte Ringnut (44) ausgebildet ist.

7. Zellstapel gemäß Anspruch 5, wobei die erste Endfläche des ersten äußeren Gerüsts (312) mit einer Vielzahl von ersten Durchflusskanälen (3110) versehen ist und die zweite Endfläche des ersten äußeren Gerüsts (312) mit einer Vielzahl von zweiten Einlass-Durchflusskanälen (3111) und einer Vielzahl von zweiten Auslass-Durchflusskanälen (3112) versehen ist;
die zweiten Einlass-Durchflusskanäle (3111) jeweils mit einem ersten Einlass (3101) und einem ersten Hohlraum kommunizieren; und
die zweiten Auslass-Durchflusskanäle (3112) jeweils mit einem ersten Auslass (3102) und einem ersten Hohlraum kommunizieren.

8. Zellstapel gemäß Anspruch 5, wobei die erste Endfläche des zweiten äußeren Gerüsts (316) mit einer Vielzahl von dritten Einlass-Durchflusskanälen (3113) und einer Vielzahl von dritten Auslass-Durchflusskanälen (3114) versehen ist, die dritten Einlass-Durchflusskanäle (3113) jeweils mit einem zweiten Einlass (3103) kommunizieren und die dritten Auslass-Durchflusskanäle (3114) jeweils mit einem zweiten Auslass (3104) kommunizieren; und
die zweite Endfläche des zweiten äußeren Gerüsts (316) mit einer Vielzahl von vierten Einlass-Durchflusskanälen (3115) und einer Vielzahl von vierten Auslass-Durchflusskanälen (3116) versehen ist, die vierten Einlass-Durchflusskanäle (3115) jeweils mit einem dritten Einlass (3107) und einem zweiten Hohlraum kommunizieren und die vierten Auslass-Durchflusskanäle (3116) jeweils mit einem dritten Auslass (3108) und einem zweiten Hohlraum kommunizieren.

9. Zellstapel gemäß Anspruch 4, wobei die zweite Baugruppe (32) eine zweite bipolare Platte (320), ein drittes äußeres Gerüst (322), das über die zweite bipolare Platte (320) gestülpt ist, und einen zweiten Stromabnehmer (327) in Kontakt mit der zweiten bipolaren Platte (320) umfasst, wobei die zweite Endfläche des dritten äußeren Gerüsts (322) fest an die zweite Durchflusskanal-Endplatte (22) gekoppelt ist und die erste Endfläche des dritten äußeren Gerüsts (322) fest an die dritte Baugruppe (33) gekoppelt ist.

10. Zellstapel gemäß Anspruch 9, wobei das dritte äußere Gerüst (322) mit einer Vielzahl von vierten Einlässen (3201) und einer Vielzahl von vierten Auslässen (3202) versehen ist und die erste Endfläche des dritten äußeren Gerüsts (322) mit einer Vielzahl von zweiten Elektrolytzufuhr-Blockierungsöffnungen und einer Vielzahl von zweiten Elektrolytabgabe-Blockierungsöffnungen versehen ist;
die vierten Einlässe (3201) jeweils in einer Position angeordnet sind, die der Durchflusskanalöffnung (263) im dritten bogenförmigen Durchflusskanal (26) entspricht und mit dieser kommuniziert, und die vierten Auslässe (3202) jeweils in einer Position angeordnet sind, die der Durchflusskanalöffnung (261, 262, 263, 264) im vierten bogenförmigen Durchflusskanal (27) entspricht und mit dieser kommuniziert; und
die zweite Elektrolytzufuhr-Blockierungsöffnung (3205) in einer Position angeordnet ist, die der Durchflusskanalöffnung (261, 262, 263, 264) im ersten bogenförmigen Durchflusskanal (24) entspricht, und die zweite Elektrolytabgabe-Blockierungsöffnung (3206) in einer Position angeordnet ist, die der Durchflusskanalöffnung (261, 262, 263, 264) im zweiten bogenförmigen Durchflusskanal (25) entspricht.

11. Zellstapel gemäß Anspruch 10, wobei am Rand jedes der vierten Einlässe (3201) und der vierten Auslässe (3202) in der zweiten Endfläche des dritten äußeren Gerüsts (322) eine fünfte Ringnut (45) ausgebildet ist, und am Rand jedes der zweiten Elektrolytzufuhr-Blockierungsöffnungen und der zweiten Elektrolytabgabe-Blockierungsöffnungen in der ersten Endfläche des dritten äußeren Gerüsts (322) eine sechste Ringnut (46) ausgebildet ist.

12. Zellstapel gemäß Anspruch 11, wobei die zweite Endfläche des dritten äußeren Gerüsts (322) mit einer Vielzahl von fünften Durchflusskanälen (3210) versehen ist, die erste Endfläche des dritten äußeren Gerüsts (322) mit einer Vielzahl von sechsten Einlass-Durchflusskanälen (3211) und einer Vielzahl von sechsten Auslass-Durchflusskanälen (3212) versehen ist, die sechsten Einlass-Durchflusskanäle (3211) jeweils mit einem vierten Einlass (3201) kommunizieren und die sechsten Auslass-Durchflusskanäle (3212) jeweils mit einem vierten Auslass (3202) kommunizieren.

13. Zellstapel gemäß Anspruch 9, wobei die dritte Baugruppe (33) eine vierte bipolare Platte (330), eine fünfte Elektrode (331), ein fünftes äußeres Gerüst (332), einen dritten Separator (334), eine sechste Elektrode (335), ein sechstes äußeres Gerüst (336), ein fünftes inneres Gerüst (338) und ein sechstes inneres Gerüst (339) umfasst;
das fünfte äußere Gerüst (332) über die fünfte Elektrode (331) gestülpt ist, eine erste Endfläche des fünften äußeren Gerüsts (332) mit einer dritten Montageplattform (333) versehen ist und die vierte bipolare Platte (330) auf der dritten Montageplattform (333) fixiert ist;
das fünfte innere Gerüst (338) über die fünfte Elektrode (331) gestülpt ist und die zweite Endfläche des fünften inneren Gerüsts (338) an der zweiten Endfläche des fünften äußeren Gerüsts (332) befestigt ist;
das fünfte äußere Gerüst (332) an dem fünften inneren Gerüst (338) montiert ist, wobei eine Vielzahl von vierten Hohlräumen in Kommunikation mit der fünften Elektrode (331) entsteht;
der dritte Separator (334) zwischen der fünften Elektrode (331) und der sechsten Elektrode (335) angeordnet ist und an die fünfte Elektrode (331), die sechste Elektrode (335), die erste Endfläche des fünften inneren Gerüsts (338) und eine erste Endfläche des sechsten äußeren Gerüsts (336) gekoppelt ist;
das fünfte innere Gerüst (338) und das sechste äußere Gerüst (336) jeweils über die sechste Elektrode (335) gestülpt sind;
eine zweite Endfläche des sechsten inneren Gerüsts (339) an einer zweiten Endfläche des sechsten äußeren Gerüsts (336) befestigt ist und das sechste äußere Gerüst (336) an dem sechsten inneren Gerüst (339) montiert ist, wobei eine Vielzahl von fünften Hohlräumen in Kommunikation mit der sechsten Elektrode (335) entsteht; und
die zweite Endfläche des fünften äußeren Gerüsts (332) fest an die erste Endfläche des sechsten äußeren Gerüsts (336) gekoppelt ist, die erste Endfläche des fünften äußeren Gerüsts (332) fest an die zweite Endfläche des zweiten äußeren Gerüsts (316) gekoppelt ist und die zweite Endfläche des sechsten äußeren Gerüsts (336) fest an die erste Endfläche des dritten äußeren Gerüsts (322) gekoppelt ist.

14. Zellstapel gemäß Anspruch 13, wobei das fünfte äußere Gerüst (332) mit einer Vielzahl von siebten Einlässen (3301), einer Vielzahl von siebten Auslässen (3302), einer Vielzahl von achten Einlässen (3303) und einer Vielzahl von achten Auslässen (3304) versehen ist, die siebten Einlässe (3301) jeweils in einer Position angeordnet sind, die der Durchflusskanalöffnung (261, 262, 263, 264) im ersten bogenförmigen Durchflusskanal (24) entspricht, die siebten Auslässe (3302) jeweils in einer Position angeordnet sind, die der Durchflusskanalöffnung (261, 262, 263, 264) im zweiten bogenförmigen Durchflusskanal (25) entspricht, die achten Einlässe (3303) jeweils in einer Position angeordnet sind, die der Durchflusskanalöffnung (261, 262, 263, 264) im dritten bogenförmigen Durchflusskanal (26) entspricht,
und die achten Auslässe (3304) jeweils in einer Position angeordnet sind, die der Durchflusskanalöffnung (261, 262, 263, 264) im vierten bogenförmigen Durchflusskanal (27) entspricht.

15. Durchflussbatterie, die den Zellstapel gemäß einem der Ansprüche 1 bis 14 umfasst.

## Revendications

1. Empilement de cellules d'une batterie à flux, comprenant : une première plaque d'extrémité (11) ; une seconde plaque d'extrémité (12) ; et au moins un module de cellule disposé entre la première plaque d'extrémité (11) et la seconde plaque d'extrémité (12), dans lequel chaque module de cellule comprend une première plaque d'extrémité de canal d'écoulement (21), une seconde plaque d'extrémité de canal d'écoulement (22) disposée à l'opposé de la première plaque d'extrémité de canal d'écoulement (21), et des ensembles à une cellule disposés entre la première plaque d'extrémité de canal d'écoulement (21) et la seconde plaque d'extrémité de canal d'écoulement (22), dans lequel les ensembles à une cellule comprennent au moins trois ensembles de cellules assemblés hermétiquement, la première plaque d'extrémité de canal d'écoulement (21) est dotée d'un premier canal d'écoulement en forme d'arc (24) et d'un deuxième canal d'écoulement en forme d'arc (25) ;la seconde plaque d'extrémité de canal d'écoulement (22) est dotée d'un troisième canal d'écoulement en forme d'arc (26) et d'un quatrième canal d'écoulement en forme d'arc (27) ;
chacun du premier canal d'écoulement en forme d'arc (24), du deuxième canal d'écoulement en forme d'arc (25), du troisième canal d'écoulement en forme d'arc (26) et du quatrième canal d'écoulement en forme d'arc (27) est doté d'une ouverture de canal d'écoulement (261, 262, 263, 264) ;
**caractérisé en ce que** chaque ouverture de canal d'écoulement (261, 262, 263, 264) est en communication avec les au moins trois ensembles de cellules assemblés hermétiquement ;un électrolyte dans le premier canal d'écoulement en forme d'arc (24) s'écoule à travers les au moins trois ensembles de cellules assemblés hermétiquement par le biais de l'ouverture de canal d'écoulement (261) dans le premier canal d'écoulement en forme d'arc (24) jusqu'au deuxième canal d'écoulement en forme d'arc (25) ; et
un électrolyte dans le troisième canal d'écoulement en forme d'arc (26) s'écoule à travers les au moins trois ensembles de cellules assemblés hermétiquement par le biais de l'ouverture de canal d'écoulement (261, 262, 263, 264) dans le troisième canal d'écoulement en forme d'arc (26) jusqu'au quatrième canal d'écoulement en forme d'arc (27).

2. Empilement de cellules selon la revendication 1, dans lequel l'ouverture de canal d'écoulement (261, 262, 263, 264) est formée dans un canal d'écoulement d'extrémité (241, 251) de chacun du premier canal d'écoulement en forme d'arc (24), du deuxième canal d'écoulement en forme d'arc (25), du troisième canal d'écoulement en forme d'arc (26) et du quatrième canal d'écoulement en forme d'arc (27) ;
un canal d'écoulement d'extrémité (241, 251) du premier canal d'écoulement en forme d'arc (24) et un canal d'écoulement d'extrémité (241, 251) du deuxième canal d'écoulement en forme d'arc (25) sont disposés respectivement sur des côtés supérieur et inférieur de la première plaque d'extrémité de canal d'écoulement (21) ;
le troisième canal d'écoulement en forme d'arc (26) est disposé à l'opposé du premier canal d'écoulement en forme d'arc (24), et l'ouverture de canal d'écoulement (261, 262, 263, 264) dans le troisième canal d'écoulement en forme d'arc (26) est disposée à une position qui n'est pas opposée à l'ouverture (261, 262, 263, 264) dans le premier canal d'écoulement en forme d'arc (24) ;
le quatrième canal d'écoulement en forme d'arc (27) est disposé à l'opposé du deuxième canal d'écoulement en forme d'arc (25), et l'ouverture de canal d'écoulement (261, 262, 263, 264) dans le quatrième canal d'écoulement en forme d'arc (27) est disposée à une position qui n'est pas opposée à l'ouverture de canal d'écoulement (261, 262, 263, 264) dans le deuxième canal d'écoulement en forme d'arc (25) ;
une extrémité d'entrée (242) du premier canal d'écoulement en forme d'arc (24) et une extrémité d'entrée (265) du troisième canal d'écoulement en forme d'arc (26) sont en communication avec un tuyau d'entrée externe ;
une extrémité de sortie (252) du deuxième canal d'écoulement en forme d'arc (25) et une extrémité de sortie (271) du quatrième canal d'écoulement en forme d'arc (27) sont en communication avec un tuyau de sortie externe ; et chacun du premier canal d'écoulement en forme d'arc (24), du deuxième canal d'écoulement en forme d'arc (25), du troisième canal d'écoulement en forme d'arc (26) et du quatrième canal d'écoulement en forme d'arc (27) est doté d'une extrémité fermée.

3. Empilement de cellules selon la revendication 1, dans lequel les au moins trois ensembles de cellules assemblés hermétiquement comprennent un premier ensemble (31), un deuxième ensemble (32) assemblé hermétiquement avec le premier ensemble (31), et au moins un troisième ensemble (33) disposé entre le premier ensemble (31) et le deuxième ensemble (32) ;
le premier ensemble (31), le deuxième ensemble (32) et l'au moins un troisième ensemble (33) sont assemblés hermétiquement ; et
le premier ensemble (31) est disposé à proximité de la première plaque d'extrémité de canal d'écoulement (21) et assemblé hermétiquement avec celle-ci, et le deuxième ensemble (32) est disposé à proximité de la seconde plaque d'extrémité de canal d'écoulement (22) et assemblé hermétiquement avec celle-ci.

4. Empilement de cellules selon la revendication 3, dans lequel le premier ensemble (31) comprend une première plaque bipolaire (310), une première électrode (311), un premier cadre extérieur (312), un premier séparateur (314), une deuxième électrode (315), un deuxième cadre extérieur (316), un premier cadre intérieur (318) et un deuxième cadre intérieur (319) ;
le premier cadre extérieur (312) est manchonné sur la première électrode (311), une première plate-forme d'installation (313) est disposée sur une première surface d'extrémité du premier cadre extérieur (312), et la première plaque bipolaire (310) est fixée sur la première plate-forme d'installation (313) ;
le premier cadre intérieur (318) est manchonné sur la première électrode (311), et une seconde surface d'extrémité du premier cadre intérieur (318) est fixée à une seconde surface d'extrémité du premier cadre extérieur (312) ;
le premier cadre extérieur (312) est assemblé avec le premier cadre intérieur (318), de manière à former une pluralité de premières cavités en communication avec la première électrode (311) ;
le premier séparateur (314) est disposé entre la première électrode (311) 311 et la deuxième électrode (315), et accouplé à la première électrode (311), à la deuxième électrode (315), à une première surface d'extrémité du premier cadre intérieur (318) et à une première surface d'extrémité du deuxième cadre extérieur (316) ;
chacun du deuxième cadre intérieur (319) et du deuxième cadre extérieur (316) est manchonné sur la deuxième électrode (315) ;
une seconde surface d'extrémité du deuxième cadre intérieur (319) est fixée à une seconde surface d'extrémité du deuxième cadre extérieur (316) ;
le deuxième cadre extérieur (316) est assemblé avec le deuxième cadre intérieur (319) de manière à former une pluralité de deuxièmes cavités en communication avec la deuxième électrode (315) ; et
la première surface d'extrémité du premier cadre extérieur (312) est accouplée à demeure à la première plaque d'extrémité de canal d'écoulement (21), la seconde surface d'extrémité du premier cadre extérieur (312) est accouplée à demeure à la première surface d'extrémité du deuxième cadre extérieur (316), et la première surface d'extrémité du deuxième cadre extérieur (316) est accouplée à demeure au troisième ensemble (33).

5. Empilement de cellules selon la revendication 4, dans lequel le premier cadre extérieur (312) est doté d'une pluralité de premières entrées (3101) et d'une pluralité de premières sorties (3102), et le deuxième cadre extérieur (316) est doté d'une pluralité de deuxièmes entrées (3103) et d'une pluralité de deuxièmes sorties (3104) ;
chaque première entrée (3101) est en communication avec une deuxième entrée (3103) correspondante, et chaque première sortie (3102) est en communication avec une deuxième sortie (3104) correspondante ;
chaque première entrée (3101) est disposée à une position correspondant à l'ouverture de canal d'écoulement (261, 262, 263, 264) dans le premier canal d'écoulement en forme d'arc (24) et en communication avec celle-ci ;
la première sortie (3102) est disposée à une position correspondant à l'ouverture de canal d'écoulement (261, 262, 263, 264) dans le deuxième canal d'écoulement en forme d'arc (25) et en communication avec celle-ci ;
la seconde surface d'extrémité du premier cadre extérieur (312) est dotée d'une pluralité de premières ouvertures de blocage d'admission d'électrolyte (3205) et d'une pluralité de premières ouvertures de blocage d'évacuation d'électrolyte (3206) ;
le deuxième cadre extérieur (316) est en outre doté d'une pluralité d'entrées (3107) et d'une pluralité de troisièmes sorties (3108) ;
chaque troisième entrée (3107) est en communication avec une première ouverture de blocage d'admission d'électrolyte (3205) correspondante, et disposée à une position correspondant à l'ouverture de canal d'écoulement (261, 262, 263, 264) dans le troisième canal d'écoulement en forme d'arc (26) ; et
la troisième extérieure (3108) est en communication avec la première ouverture de blocage d'évacuation d'électrolyte (3206), et disposée à une position correspondant à l'ouverture de canal d'écoulement (261, 262, 263, 264) dans le quatrième canal d'écoulement en forme d'arc (27).

6. Empilement de cellules selon la revendication 5, dans lequel une première rainure annulaire (41) est formée à une périphérie de chacune des premières entrées (3101) et des premières sorties (3102) dans la première surface d'extrémité du premier cadre extérieur (312) ;
une deuxième rainure annulaire (42) est formée à une périphérie de chacune des premières ouvertures de blocage d'admission d'électrolyte et des premières ouvertures de blocage d'évacuation d'électrolyte ;
une troisième rainure annulaire (43) est formée à une périphérie de chacune des troisièmes entrées (3107) et des troisièmes sorties (3108) dans la première surface d'extrémité du deuxième cadre extérieur (316) ; et
une quatrième rainure annulaire (44) est formée à une périphérie de chacune des deuxièmes entrées (3103) et des deuxièmes sorties (3104) dans la seconde surface d'extrémité du deuxième cadre extérieur (3166).

7. Empilement de cellules selon la revendication 5, dans lequel la première surface d'extrémité du premier cadre extérieur (312) est dotée d'une pluralité de premiers canaux d'écoulement (3110), et la seconde surface d'extrémité du premier cadre extérieur (312) est dotée d'une pluralité de deuxièmes canaux d'écoulement d'entrée (3111) et d'une pluralité de deuxièmes canaux d'écoulement de sortie (3112) ;
chaque deuxième canal d'écoulement d'entrée (3111) est en communication avec une première entrée (3101) et une première cavité ; et
chaque deuxième canal d'écoulement de sortie (3112) est en communication avec une première sortie (3102) et une première cavité.

8. Empilement de cellules selon la revendication 5, dans lequel la première surface d'extrémité du deuxième cadre extérieur (316) est dotée d'une pluralité de troisièmes canaux d'écoulement d'entrée (3113) et d'une pluralité de troisièmes canaux d'écoulement de sortie (3114), chaque troisième canal d'écoulement d'entrée (3113) est en communication avec une deuxième entrée (3103), et chaque troisième canal d'écoulement de sortie (3114) est en communication avec une deuxième sortie (3104) ; et
la seconde surface d'extrémité du deuxième cadre extérieur (316) est dotée d'une pluralité de quatrièmes canaux d'écoulement d'entrée (3115) et d'une pluralité quatrièmes de canaux d'écoulement de sortie (3116), chaque quatrième canal d'écoulement d'entrée (3115) est en communication avec une troisième entrée (3107) et une deuxième cavité, et chaque quatrième canal d'écoulement de sortie (3116) est en communication avec une troisième sortie (3108) et une deuxième cavité.

9. Empilement de cellules selon la revendication 4, dans lequel le deuxième ensemble (32) comprend une deuxième plaque bipolaire (320), un troisième cadre extérieur (322) manchonné sur la deuxième plaque bipolaire (320), et un second collecteur de courant (327) en contact avec la deuxième plaque bipolaire (320), dans lequel la seconde surface d'extrémité du troisième cadre extérieur (322) est accouplée à demeure à la seconde plaque d'extrémité de canal d'écoulement (22), et la première surface d'extrémité du troisième cadre extérieur (322) est accouplée à demeure au troisième ensemble (33).

10. Empilement de cellules selon la revendication 9, dans lequel le troisième cadre extérieur (322) est doté d'une pluralité de quatrièmes entrées (3201) et d'une pluralité de quatrièmes sorties (3202), et la première surface d'extrémité du troisième cadre extérieur (322) est dotée d'une pluralité de secondes ouvertures de blocage d'admission d'électrolyte et d'une pluralité de secondes ouvertures de blocage d'évacuation d'électrolyte ;
chaque quatrième entrée (3201) est disposée à une position correspondant à l'ouverture de canal d'écoulement (263) dans le troisième canal d'écoulement en forme d'arc (26), et en communication avec celle-ci, et chaque quatrième sortie (3202) est disposée à une position correspondant à l'ouverture de canal d'écoulement (261, 262, 263, 264) dans le quatrième canal d'écoulement en forme d'arc (27), et en communication avec celle-ci ; et
la seconde ouverture de blocage d'admission d'électrolyte (3205) est disposée à une position correspondant à l'ouverture de canal d'écoulement (261, 262, 263, 264) dans le premier canal d'écoulement en forme d'arc (24), et la seconde ouverture de blocage d'évacuation d'électrolyte (3206) est disposée à une position correspondant à l'ouverture de canal d'écoulement (261, 262, 263, 264) dans le deuxième canal d'écoulement en forme d'arc (25).

11. Empilement de cellules selon la revendication 10, dans lequel une cinquième rainure annulaire (45) est formée à une périphérie de chacune des quatrièmes entrées (3201) et des quatrièmes sorties (3202) dans la seconde surface d'extrémité du troisième cadre extérieur (322), et une sixième rainure annulaire (46) est formée à une périphérie de chacune des secondes ouvertures de blocage d'admission d'électrolyte et des secondes ouvertures de blocage d'évacuation d'électrolyte dans la première surface d'extrémité du troisième cadre extérieur (322).

12. Empilement de cellules selon la revendication 11, dans lequel la seconde surface d'extrémité du troisième cadre extérieur (322) est dotée d'une pluralité de cinquièmes canaux d'écoulement (3210), la première surface d'extrémité du troisième cadre extérieur (322) est dotée d'une pluralité de sixièmes canaux d'écoulement d'entrée (3211) et d'une pluralité de sixièmes canaux d'écoulement de sortie (3212), chaque sixième canal d'écoulement d'entrée (3211) est en communication avec une quatrième entrée (3201), et chaque sixième canal d'écoulement de sortie (3212) est en communication avec une quatrième sortie (3202).

13. Empilement de cellules selon la revendication 9, dans lequel le troisième ensemble (33) comprend une quatrième plaque bipolaire (330), une cinquième électrode (331), un cinquième cadre extérieur (332), un troisième séparateur (334), une sixième électrode (335), un sixième cadre extérieur (336), un cinquième cadre intérieur (338) et un sixième cadre intérieur (339) ;
le cinquième cadre extérieur (332) est manchonné sur la cinquième électrode (331), une première surface d'extrémité du cinquième cadre extérieur (332) est dotée d'une troisième plate-forme d'installation (333), et la quatrième plaque bipolaire (330) est fixée sur la troisième plate-forme d'installation (333) ;
le cinquième cadre intérieur (338) est manchonné sur la cinquième électrode (331), et la seconde surface d'extrémité du cinquième cadre intérieur (338) est fixée à la seconde surface d'extrémité du cinquième cadre extérieur (332) ;
le cinquième cadre extérieur (332) est assemblé avec le cinquième cadre intérieur (338) pour former une pluralité de quatrièmes cavités en communication avec la cinquième électrode (331) ;
le troisième séparateur (334) est disposé entre la cinquième électrode (331) et la sixième électrode (335), et accouplé à la cinquième électrode (331), à la sixième électrode (335), à la première surface d'extrémité du cinquième cadre intérieur (338) et à une première surface d'extrémité du sixième cadre extérieur (336) ;
chacun du cinquième cadre intérieur (338) et du sixième cadre extérieur (336) est manchonné sur la sixième électrode (335) ;
une seconde surface d'extrémité du sixième cadre intérieur (339) est fixée à une seconde surface d'extrémité du sixième cadre extérieur (336), et le sixième cadre extérieur (336) est assemblé avec le sixième cadre intérieur (339) pour former une pluralité de cinquièmes cavités en communication avec la sixième électrode (335) ; et
la seconde surface d'extrémité du cinquième cadre extérieur (332) est accouplée à demeure à la première surface d'extrémité du sixième cadre extérieur (336), la première surface d'extrémité du cinquième cadre extérieur (332) est accouplée à demeure à la seconde surface d'extrémité du deuxième cadre extérieur (316), et la seconde surface d'extrémité du sixième cadre extérieur (336) est accouplée à demeure à la première surface d'extrémité du troisième cadre extérieur (322).

14. Empilement de cellules selon la revendication 13, dans lequel le cinquième cadre extérieur (332) est doté d'une pluralité de septièmes entrées (3301), d'une pluralité de septièmes sorties (3302), d'une pluralité de huitièmes entrées (3303) et d'une pluralité de huitièmes sorties (3304), chaque septième entrée (3301) est disposée à une position correspondant à l'ouverture de canal d'écoulement (261, 262, 263, 264) dans le premier canal d'écoulement en forme d'arc (24), chaque septième sortie (3302) est disposée à une position correspondant à l'ouverture de canal d'écoulement (261, 262, 263, 264) dans le deuxième canal d'écoulement en forme d'arc (25), chaque huitième entrée (3303) est disposée à une position correspondant à l'ouverture de canal d'écoulement (261, 262, 263, 264) dans le troisième canal d'écoulement en forme d'arc (26),
et chaque huitième sortie (3304) est disposée à une position correspondant à l'ouverture de canal d'écoulement (261, 262, 263, 264) dans le quatrième canal d'écoulement en forme d'arc (27).

15. Batterie à flux comprenant l'empilement de cellules selon l'une quelconque des revendications 1 à 14.
